# EUROPEAN PATENT APPLICATION

(11) **EP 4 804 242 A1**
(43) Date of publication of application: **09.09.2026**
(21) Application number: 24895720.1
(22) Date of filing: 05.08.2024
(51) Int. Cl.: H01M 4/04, H01M 10/04

(54) **HOT-PRESSING ROLLER MECHANISM, PRESSING ROLLER MECHANISM, ADHESIVE APPLICATION DEVICE AND BATTERY PRODUCTION SYSTEM**

(30) Priority: 30.11.2023 CN 202311641527
(71) Applicant: Contemporary Amperex Technology Co., Limited, Ningde, Fujian 352100 (CN)
(72) Inventor: SUN, Xiangli, Ningde, Fujian 352100 (CN); QIN, Xiong, Ningde, Fujian 352100 (CN); JI, Tingzhen, Ningde, Fujian 352100 (CN); ZHANG, Jianjun, Ningde, Fujian 352100 (CN); ZHANG, Yulong, Ningde, Fujian 352100 (CN); PANG, Bin, Ningde, Fujian 352100 (CN); DENG, Bokai, Ningde, Fujian 352100 (CN); WANG, Yaohui, Ningde, Fujian 352100 (CN); ZHAN, Shujia, Ningde, Fujian 352100 (CN); KE, Pengfei, Ningde, Fujian 352100 (CN); YANG, Chao, Ningde, Fujian 352100 (CN)
(74) Representative: Kraus & Lederer PartGmbB
(86) International application number: PCT/CN2024/109853
(87) International publication number: WO 2025/112617

(57) **Abstract**

Disclosed in the present application are a hot-pressing roller mechanism, a pressing roller mechanism, an adhesive application device and a battery production system. The hot-pressing roller mechanism comprises a hot-pressing roller and a heating assembly, wherein the heating assembly and the hot-pressing roller are spaced apart from each other; and the heating assembly is configured to perform non-contact heating on the hot-pressing roller. By means of non-contact heating, no structural member is introduced to the surface of the hot-pressing roller, such that the phenomenon of foreign matter being introduced to the surface of an electrode sheet during the process of the hot-pressing roller performing hot pressing on the electrode sheet can be alleviated, thus increasing the adhesive application yield. The hot-pressing roller mechanism is used to perform hot pressing on an electrode sheet to which an adhesive has been applied, and to smooth and compact an adhesive tape on the surface of the electrode sheet, thus enhancing the bonding tightness between the adhesive tape and the electrode sheet, and increasing the adhesive application yield.

## Description

### CROSS-REFERENCE TO RELATED APPLICATION

The present application claims priority and based on Chinese Patent Application No. 2023116415278 filed on November 30, 2023, the entire contents of which are incorporated herein by reference.

### TECHNICAL FIELD

The present application relates to the technical field of battery processing, in particular, to a hot-pressing roller mechanism, a pressing roller mechanism, an adhesive application device and a battery production system.

### BACKGROUND

A manufacturing process of a battery electrode plate may require performing adhesive application on the electrode plate. An adhesive tape attached to a battery cell includes a substrate film, an adhesive film, and a release film which are stacked in sequence.

With the development of technology, the demand for an adhesive application yield is becoming increasingly high.

### SUMMARY OF THE INVENTION

The present application provides a hot-pressing roller mechanism, a pressing roller mechanism, an adhesive application device and a battery production system, so as to increase an adhesive application yield.

To solve the above technical problems, a first aspect of the present application provides a hot-pressing roller mechanism, including: a hot-pressing roller and a heating assembly, wherein the heating assembly and the hot-pressing roller are spaced apart from each other; and the heating assembly is configured to perform non-contact heating on the hot-press roller. By means of non-contact heating, no structural member is introduced to a surface of the hot-pressing roller, such that a phenomenon of foreign matter being introduced to a surface of an electrode plate during a process of the hot-pressing roller performing hot pressing on the electrode plate may be alleviated, thus increasing an adhesive application yield. The hot-pressing roller mechanism is used to perform hot pressing on an electrode plate to which an adhesive has been applied, and to smooth and compact an adhesive tape on the surface of the electrode plate, thus enhancing bonding tightness between the adhesive tape and the electrode plate, and increasing the adhesive application yield.

In an implementation, the hot-pressing roller mechanism further includes a hot-pressing base. The hot-pressing roller and the heating assembly are respectively connected to the hot-pressing base, the hot-pressing base is provided with a through hole corresponding to the hot-pressing roller, and the hot-pressing roller and the heating assembly are respectively arranged at two opposite ends of the through hole; and the heating assembly is a heat radiation assembly or a hot air blowing assembly. Heat from the heating assembly is conducted to the hot-pressing roller through the through hole, achieving non-contact heating.

In an implementation, the hot-pressing roller mechanism further includes a hot-pressing base. The hot-pressing roller and the heating assembly are respectively connected to the hot-pressing base, an orthographic projection of the hot-pressing roller on the hot-pressing base at least partially overlaps with an orthographic projection of the heating assembly on the hot-pressing base; the hot-pressing base is of a transparent material; and the heating assembly is a heat radiation assembly. Heat from the heating assembly passes through the hot-pressing base of the transparent material to be transferred to the hot-pressing roller, achieving non-contact heating. By making that the orthographic projection of the hot-pressing roller on the hot-pressing base at least partially overlaps with the orthographic projection of the heating assembly on the hot-pressing base, a heat conduction path is shortened, and a heat utilization rate is increased.

In an implementation, the heating assembly is a hot air blowing assembly, an air outlet direction of the hot air blowing assembly is perpendicular to an axial direction of the hot-pressing roller, and an angle between the air outlet direction of the hot air blowing assembly and an electrode plate transport direction is 30-60 degrees. The angle between the air outlet direction of the heating assembly and the electrode plate transport direction is 30-60 degrees, which reduces the interference on extrusion of the hot-pressing roller on the electrode plate, meanwhile achieves efficient heating of the hot-pressing roller, and achieves a good hot-pressing effect.

In an implementation, in the axial direction of the hot-pressing roller, a width of an air outlet of the heating assembly is greater than or equal to a length of the hot-pressing roller, so that each part of the hot-pressing roller is heated uniformly, and a temperature consistency of each part of the hot-pressing roller is maintained.

In an implementation, the hot-pressing roller mechanism further includes a temperature sensor configured to detect a temperature of the hot-pressing roller. The temperature sensor detects the temperature of the hot-pressing roller in real time and feeds the detected temperature back to a control assembly. The control assembly is configured to control a heating parameter of the heating assembly according to the temperature of the hot-pressing roller fed back by the temperature sensor, so as to maintain the temperature of the hot-pressing roller at a predetermined temperature.

In an implementation, the hot-pressing roller mechanism further includes a hot-pressing drive member connected to the hot-pressing roller; and the hot-pressing drive member is configured to drive the hot-pressing roller to move in a direction close to or away from an electrode plate, so as to automatically adjust a distance between the hot-pressing roller and the electrode plate.

In an implementation, the hot-pressing roller mechanism includes two hot-pressing rollers; the two hot-pressing rollers are respectively arranged on two sides of the electrode plate; and each hot-pressing roller is correspondingly provided with the heating assembly, the hot-pressing drive member and the temperature sensor. The two hot-pressing rollers are respectively arranged on two opposite sides of a transport path of the electrode plate, and there is one hot-pressing roller on each of the two opposite sides of the electrode plate to perform hot pressing on an adhesive tape on a surface of the electrode plate, so that the adhesive tape attached to the surface of the electrode plate is more closely adhered to the electrode plate.

In an implementation, the two hot-pressing rollers are arranged axially symmetrical to each other, so as to extrude each part of the electrode plate from both sides, maintaining that the adhesive tape on each part of the electrode plate is tightly bonded to the electrode plate.

To solve the above technical problems, a second aspect of the present application provides a pressing roller mechanism, including a cold-pressing roller mechanism and a hot-pressing roller mechanism. The cold-pressing roller mechanism is configured to perform preliminary extrusion on an electrode plate to which an adhesive tape has been applied; the hot-pressing roller mechanism is arranged downstream of the cold-pressing roller mechanism; the hot-pressing roller mechanism is configured to perform hot pressing on the electrode plate subjected to preliminary extrusion; and the hot-pressing roller mechanism is the hot-pressing roller mechanism described in any one of the above.

By arranging the cold-pressing roller mechanism to perform preliminary extrusion on the electrode plate to which the adhesive tape has been applied, and to smooth and compact the adhesive tape on the surface of the electrode plate, the bonding tightness between the adhesive tape and the electrode plate is improved. The hot-pressing mechanism further smooths and compacts the adhesive tape on the surface of the electrode plate, thus enhancing the bonding tightness between the adhesive tape and the electrode plate.

In an implementation, the pressing roller mechanism further includes a preheating assembly; the preheating assembly is located between the cold-pressing roller mechanism and the hot-pressing roller mechanism along a transport path of the electrode plate; and the preheating assembly is configured to preheat an adhesive tape on the preliminarily extruded electrode plate, so as to soften the adhesive tape, and improve the flexibility of adhesive application.

In an implementation, the preheating assembly includes a hot air blowing assembly, the hot air blowing assembly includes a hot air blowing gun and a hot air blowing gun cover, and the hot air blowing gun cover is arranged at an end of the hot air blowing gun close to the electrode plate. The preheating assembly has a simple structure and low cost, and can achieve a good preheating effect.

In an implementation, an angle between an air outlet direction of the hot air blowing assembly and an electrode plate transport direction is 80-100 degrees, which increases a heat utilization rate of hot air blown out by the hot air blowing gun and has a good preheating effect on the adhesive tape on the electrode plate.

In an implementation, the cold-pressing roller mechanism includes a cold-pressing drive member and a cold-pressing roller, the cold-pressing drive member is connected to the cold-pressing roller, and the cold-pressing drive member is configured to drive the cold-pressing roller to move in a direction close to or away from the electrode plate. By controlling the cold-pressing drive member, an extrusion force of the cold-pressing roller on the electrode plate is achieved, and a distance between the cold-pressing roller and the electrode plate is automatically adjusted.

In an implementation, the pressing roller mechanism includes two hot-pressing rollers, two cold-pressing rollers, and two preheating assemblies. The two hot-pressing rollers, the two cold-pressing rollers, and the two preheating assemblies are respectively arranged on two sides of the electrode plate. There is one cold-pressing roller on each of the two opposite sides of the electrode plate to perform pre-pressing on the adhesive tape on the surface of the electrode plate, there is one preheating assembly on each of the two opposite sides of the electrode plate to perform preheating on the adhesive tape on the surface of the electrode plate, and there is one hot-pressing roller on each of the two opposite sides of the electrode plate to perform hot pressing on the adhesive tape on the surface of the electrode plate, so that the adhesive tape attached to the surface of the electrode plate is more closely adhered to the electrode plate.

In an implementation, the two hot-pressing rollers are arranged axially symmetrical to each other; and/or, the two cold-pressing rollers are arranged axially symmetrical to each other; and/or, the two preheating assemblies are arranged axially symmetrical to each other, so as to extrude each part of the electrode plate from both sides, maintaining that the adhesive tape on each part of the electrode plate is tightly bonded to the electrode plate.

To solve the above technical problems, a third aspect of the present application provides an adhesive application device, including the pressing roller mechanism described in any one of the above, and having at least the same advantages as the pressing roller mechanism.

In an implementation, the adhesive application device further includes a control assembly. A hot-pressing roller mechanism, a cold-pressing roller mechanism, and a preheating assembly are respectively connected to the control assembly; and the control assembly is configured to control a distance between a hot-pressing roller of the hot-pressing roller mechanism and an electrode plate, control a temperature of the hot-pressing roller, control a distance between a cold-pressing roller of the cold-pressing roller mechanism and the electrode plate, and control a heating temperature of the preheating assembly. The control assembly automatically smooths and compacts the electrode plate to which the adhesive has been applied, thereby enhancing the bonding tightness between the adhesive tape and the electrode plate and increasing an adhesive application yield.

To solve the above technical problems, a fourth aspect of the present application provides a battery production system, including the adhesive application device described in any one of the above, and having at least the same advantages as the adhesive application device.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### BRIEF DESCRIPTION OF THE DRAWINGS

In order to illustrate the technical solutions in the embodiments of the present application more clearly, the accompanying drawings to be used in description of the embodiments will be briefly introduced below. Obviously, the accompanying drawings described below are only some embodiments of the present application. For those of ordinary skill in the art, other accompanying drawings can also be obtained based on these accompanying drawings without any creative effort.
FIG. 1a is a schematic structural diagram of an adhesive application device provided by an embodiment of the present application.
FIG. 1b is a schematic structural diagram of an adhesive tape provided by an embodiment of the present application.
FIG. 2 is a schematic diagram of a partial structure of an unwinding mechanism of the adhesive application mechanism shown in FIG. 1a.
FIG. 3 is a schematic structural exploded view of an unwinding reel and an unwinding fixed shaft of the unwinding mechanism shown in FIG. 2.
FIG. 4 is a schematic structural diagram of a deviation-rectifying guide wheel assembly and a positioning guide wheel assembly of the unwinding mechanism shown in FIG. 1a.
FIG. 5 is a schematic structural exploded view of the deviation-rectifying guide wheel assembly shown in FIG. 4.
FIG. 6 is a schematic diagram of a partial structure of a winding mechanism of the adhesive application mechanism shown in FIG. 1a.
FIG. 7 is a schematic structural diagram of an unwinding swing roller assembly of the adhesive application mechanism shown in FIG. 1a.
FIG. 8 is a schematic structural diagram of a second deviation-rectifying detection assembly of the adhesive application mechanism shown in FIG. 1a.
FIG. 9 is a schematic structural diagram of a tension control mechanism of the adhesive application mechanism shown in FIG. 1a.
FIG. 10 is a schematic structural diagram of a tension sensor of the adhesive application mechanism shown in FIG. 1a.
FIG. 11 is a schematic structural diagram of a traction mechanism of the adhesive application mechanism shown in FIG. 1a.
FIG. 12 is a schematic structural diagram of a feeding bias detection mechanism of the adhesive application device shown in FIG. 1a.
FIG. 13 is a schematic structural diagram of an adhesive application deviation-rectifying mechanism of the adhesive application device shown in FIG. 1a.
FIG. 14 is a schematic structural diagram of the pressing roller mechanism shown in FIG. 1a.
FIG. 15 is a schematic structural diagram of the cold-pressing roller mechanism shown in FIG. 14.
FIG. 16 is a schematic structural diagram of the hot-pressing roller mechanism shown in FIG. 14.
FIG. 17 is a schematic diagram of a simple structure of a hot-pressing roller and a heating assembly of the hot-pressing roller mechanism shown in FIG. 16.

In the accompanying drawings:
adhesive application device 1000;
support mechanism 100, support plate 101;
adhesive application mechanism 200, unwinding mechanism 210, unwinding assembly 211, reel 212, first deviation-rectifying detection assembly 213, deviation-rectifying drive assembly 214, unwinding motor 2111, unwinding reel 2121, annular roll material groove 2121a, unwinding fixed shaft 2112, unwinding synchronous wheel 2113, unwinding drive wheel 2114, unwinding synchronous belt 2115, wrapping member 2121b, first fixing sheet 2121c, second fixing sheet 2121d, material detection sensor 2116, pedestal 2141, guide rail 2142, slider 2143, deviation-rectifying motor 2144, first motor coupling 2145, first lead screw 2146, first sensor 2147, unwinding connecting block 2117, bearing rod 2118, bearing seat 2119, deviation-rectifying guide wheel assembly 215, positioning guide wheel assembly 216, annular limiting groove 2150, support shaft 2151, bearing 2152, adjusting ring 2153, limiting member 2154, limiting portion 2151a, first cylinder 2151b, second cylinder 2151c, winding mechanism 220, winding assembly 221, winding reel 222, misalignment drive assembly 223, winding motor 2211, winding fixing shaft 2212, winding synchronous wheel 2213, winding drive wheel 2214, winding synchronous belt 2215, annular winding groove 2220, rotating shaft 2221, two winding discs 2222, fixing member 2223, substrate detection sensor 224, unwinding swing roller assembly 230, adhesive tape positioning swing roller 231, swing roller connecting block 232, swing roller bearing seat 233, signal converter 234, first rubber roll 2311, two first limiting sheets 2312, second deviation-rectifying detection assembly 240, mobile motor 241, second motor coupling 242, optical axis positioning column 243, second lead screw 244, signal feedback board 245, adhesive tape sensor 246, linear bearing 247, second sensor 248, base 249, notch 2451, tension control mechanism 250, tension control motor 251, tension drive wheel 252, tension synchronous belt 253, tension synchronous wheel 254, tension coupling 255, tension bearing seat 256, tension limiting block 257, tension connecting block 258, tension positioning swing roller 259, second rubber roll 2591, second limiting sheet 2592, traction mechanism 260, traction motor 261, traction coupling 262, rotating roller 263, roller positioning block 264, positioning roller 265, roller cylinder 266, traction positioning plate 267, tension sensor 270, tension detection portion 271;
feeding bias detection mechanism 300, electrode plate feeding deviation-rectifying motor 301, third motor coupling 302, electrode plate positioning guide shaft 303, third lead screw 304, electrode plate bearing seat 305, electrode plate detection plate 306, electrode plate detection sensor 307, electrode plate detection seat 308, third sensor 309, opening 3061;
adhesive application deviation-rectifying mechanism 400, transplanting motor 401, fourth coupling 402, transplanting fixing plate 403, fourth lead screw 404, linear track 405, linear sliding member 406, transplanting connecting block 407, fourth sensor 408, transplanting base 409;
cold-pressing roller mechanism 500, cold-pressing drive member 501, cold-pressing roller 502;
hot-pressing roller mechanism 600, hot-pressing drive member 601, hot-pressing roller 602, heating assembly 603, temperature sensor 604, first hot-pressing drive member 601a, second hot-pressing drive member 601b, first hot-pressing roller 602a, second hot-pressing roller 602b, first heating assembly 603a, second heating assembly 603b, first temperature sensor 604a, second temperature sensor 604b, hot-pressing base 605, housing 6021, medium 6022;
adhesive tape roll material 700, adhesive tape 701, substrate film 7011, adhesive film 7012, release film 7013;
pressing roller mechanism 800, preheating assembly 900, hot air blowing gun 901, and hot air blowing gun cover 902.

### DETAILED DESCRIPTION

In order to make the objectives, technical solutions and advantages of the present application clearer, the embodiments of the technical solutions of the present application will be described in detail below with reference to the accompanying drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the descriptions of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the descriptions of the embodiments of the present application, the term "a plurality of" refers to two or more (including two), and similarly, "a plurality of groups" refers to two or more (including two) groups, and "a plurality of sheets" refers to two or more (including two) sheets, unless otherwise specifically limited.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

Amounts, ratios, and other numerical values are presented herein in the format of a range. It should be understood that such the format of the range is for convenience and brevity and should be construed flexibly to include not only the numerical values expressly specified as limits of the range, but also all individual values or sub-ranges encompassed within the range, as if each value and sub-range are expressly specified.

Types of batteries typically include power lithium batteries and energy storage batteries. A manufacturing process of battery electrode plates typically involves coating active material slurry onto a current collector to form a large roll, then pre-slitting the large roll into single-film zone roll materials, and finally die-cutting and slitting the single-film zone roll materials to obtain small rolls. After die-cutting and slitting, the small rolls are wound to form bare battery cells.

Die-cutting is typically performed using a rotary cutter. The cutter is divided into an upper cutter and a lower cutter. The upper cutter and the lower cutter are interlocked (0.5 mm-1.5 mm) and are close to each other. The upper cutter and the lower cutter rotate synchronously in opposite directions. The electrode plate is sheared (with some additional cutting) and separated by the interlocking part of the upper cutter and the lower cutter.

Because the upper cutter and the lower cutter are interlocked and are close to each other, wear and tear at the interlocking part leads to dulling or chipping of a cutter edge. In an actual battery cell manufacturing process, different material formulations and process requirements need to be addressed. The electrode plate may have different working conditions such as thick coating or thin coating, which will cause metal burrs to be generated on the slitting edge. The metal burrs on the slitting edge that exceed the specifications will pierce a separator after the battery cell is formed, resulting in a short circuit inside the battery cell. For example, a tab of the electrode plate is formed by laser cutting, metal slitting, and cutter cutting. During the cutting process, a metal heat-affected zone and metallic filaments are generated, which affects the safety of the battery.

Therefore, it is necessary to perform adhesive application on an edge of the die-cut electrode plate, and an adhesive film may safely isolate the metal burrs on the edge of the electrode plate. In view of this, the present application provides a hot-pressing roller mechanism, a pressing roller mechanism, an adhesive application device and a battery production system, so as to automate an entire adhesive application processand increase an adhesive application yield.

It should be noted that the adhesive application device provided in the embodiment of the present application is applicable to die-cutting and slitting equipment, and can be linked with the die-cutting and slitting equipment to realize adhesive application of an electrode plate. The adhesive application device has the advantages of fast adhesive application efficiency, accurate adhesive application position, controllable adhesive application speed, and continuous and stable adhesive application. The hot-pressing roller mechanism, the pressing roller mechanism, the adhesive application device and the battery production system provided in the embodiment of the present application are not limited to perform adhesive application on a die-cut electrode plate, but can also be used for die-cutting after adhesive application, or adhesive application in other processes during battery production.

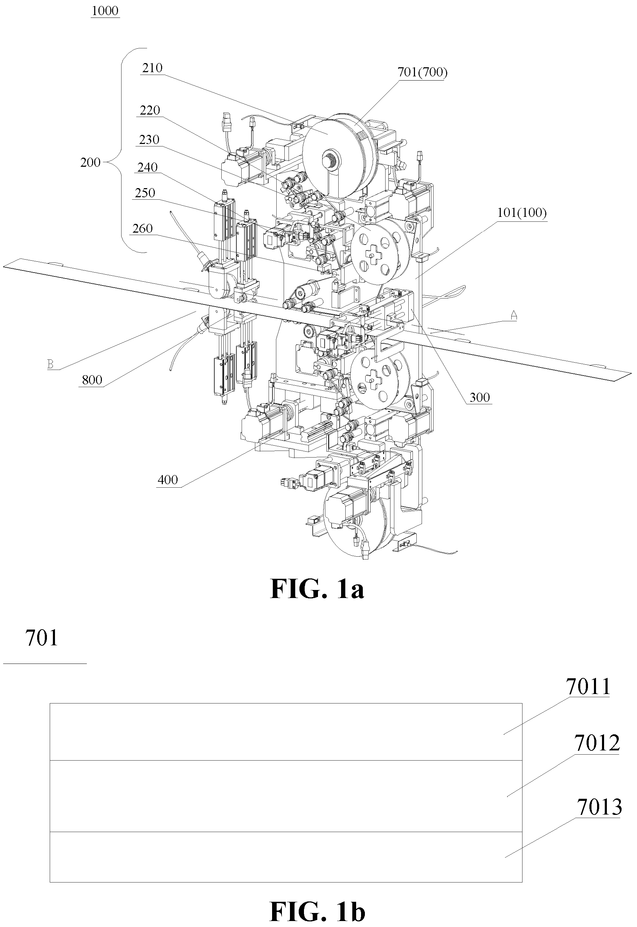

Referring to FIG. 1a, FIG. 1a is a schematic structural diagram of an adhesive application device provided by an embodiment of the present application.

The adhesive application device 1000 provided by the embodiment of the present application includes a support mechanism 100 and an adhesive application mechanism 200. The adhesive application device 1000 is configured to perform adhesive application on an electrode plate. Optionally, the adhesive application device 1000 is configured to perform adhesive application on an edge of the electrode plate.

The support mechanism 100 has a feeding end A and a discharging end B. The feeding end A and the discharging end B define a transport path of the electrode plate. Specifically, the electrode plate is in a long strip shape, and is transported from the feeding end A to the discharging end B. Here, feeding end A refers to an inlet where the electrode enters the adhesive application device 1000; the discharging end B refers to an outlet where the electrode plate is transported to the outside of a working range of the adhesive application device 1000; and the long strip shape refers to a length of the electrode plate being much greater than its width.

In an implementation, the support mechanism 100 includes a support plate 101, and the support plate 101 refers to a structural member that plays a role in supporting and positioning. Optionally, the support plate 101 is perpendicular to the ground, the electrode plate is parallel to the ground, and a conveying direction of the electrode plate is perpendicular to the support plate 101.

The adhesive application mechanism 200 is arranged on the support mechanism 100 and is located on at least one side of the transport path of the electrode plate. The adhesive application mechanism 200 is configured to perform adhesive application on one surface of the electrode plate.

In an implementation, the adhesive application device 1000 includes one adhesive application mechanism 200. The adhesive application mechanism 200 is located on one side of the transport path of the electrode plate, and performs adhesive application on the edge or the entire face of one surface of the electrode plate. Optionally, the adhesive application mechanism 200 performs adhesive application on the edge of one surface of the electrode plate. By employing the adhesive application mechanism 200 to perform adhesive application on the electrode plate, the automation and efficiency of adhesive application of the electrode plate are improved, thereby increasing production capacity. At the same time, an adhesive film formed on the electrode plate covers burrs on a cut surface after slicing of the electrode plate, which has an effect of safe isolation and improves battery performance.

In an implementation, the adhesive application device 1000 includes two adhesive application mechanisms 200. The two adhesive application mechanisms 200 are respectively arranged on two opposite sides of the transport path of the electrode plate, and respectively perform adhesive application on the edges or the entire faces of the two opposite surfaces of the electrode plate, thereby reducing the impact of burrs on the edge of the electrode plate on the battery performance.

In a specific implementation, the two adhesive application mechanisms 200 both perform adhesive application on an edge of a long edge of the electrode plate. The electrode plate is in the long strip shape and includes a first surface and a second surface which are arranged opposite to each other. The two adhesive application mechanisms 200 are defined as a first adhesive application mechanism and a second adhesive application mechanism, respectively. The first adhesive application mechanism performs adhesive application on a long edge of the first surface of the electrode plate, and the second adhesive application mechanism performs adhesive application on a long edge of the second surface of the electrode plate. In a width direction of the electrode plate, an adhesive application edge on the first surface of the electrode plate and an adhesive application edge on the second surface of the electrode plate may be on the same side or on two opposite sides. Exemplarily, when there are burrs on both sides in the length direction of the electrode plate, the first adhesive application mechanism may be used to perform adhesive application on the long edge of the first surface of the electrode plate, and the second adhesive application mechanism may be used to perform adhesive application on the long edge of the second surface of the electrode plate. A long edge, to be subjected to adhesive application, of the first surface of the electrode plate and a long edge, to be subjected to adhesive application, of the second surface of the electrode plate are arranged opposite to each other, thereby achieving adhesive application isolation and safety protection for the burrs on the edges of both sides of the electrode plate. For another example, the first adhesive application mechanism is used to perform adhesive application on the long edge of the first surface of the electrode plate, and the second adhesive application mechanism is used to perform adhesive application on the long edge of the second surface of the electrode plate. The long edge, to be subjected to adhesive application, of the first surface of the electrode plate and the long edge, to be subjected to adhesive application, of the second surface of the electrode plate are on the same side. Double adhesive application isolation and safety protection are performed on the burrs on one side of the edge of the electrode plate to further reduce the impact of burrs on the edge of the electrode plate on the battery performance.

It should be noted that when one adhesive application mechanism 200 is arranged on each of the two opposite sides of the transport path of the electrode plate, the structures of the two adhesive application mechanisms 200 may be the same. For example, when the adhesive application device 1000 is working, the electrode plate is transported in a horizontal direction, and the two adhesive application mechanisms 200 are arranged on upper and lower sides of the transport path of the electrode plate in a mirror image manner.

The adhesive application mechanism 200 includes an unwinding mechanism 210 and a winding mechanism 220. The unwinding mechanism 210 is configured to unwind an adhesive tape 701. The winding mechanism 220 is configured to wind a release film 7013 of the adhesive tape 701. The adhesive tape 701 includes a substrate film 7011, an adhesive film 7012 and a release film 7013 which are stacked in sequence (as shown in FIG. 1b, which is a schematic structural diagram of the adhesive tape 701 provided in the embodiment of the present application). The release film 7013 is configured to protect the adhesive film 7012. After the adhesive tape 701 is attached to the electrode plate, the adhesive film 7012 comes into contact with the electrode plate. By arranging the unwinding mechanism 210 to unwind the adhesive tape 701 and the winding mechanism 220 to wind the release film 7013, the space occupied by the adhesive application device 1000 is reduced, a space utilization rate is increased, and the entire adhesive application process is automated. By using the winding mechanism 220 to wind the release film 7013 of the adhesive tape 701, the collection efficiency of the release film 7013 by the adhesive application device 1000 during the adhesive application process of the electrode plate can be improved.

The adhesive application mechanism 200 further includes a control assembly (not shown). The unwinding mechanism 210 and the winding mechanism 220 are respectively connected to the control assembly. The control assembly controls the unwinding mechanism 210 to unwind and the winding mechanism 220 to wind, thereby realizing automated adhesive application.

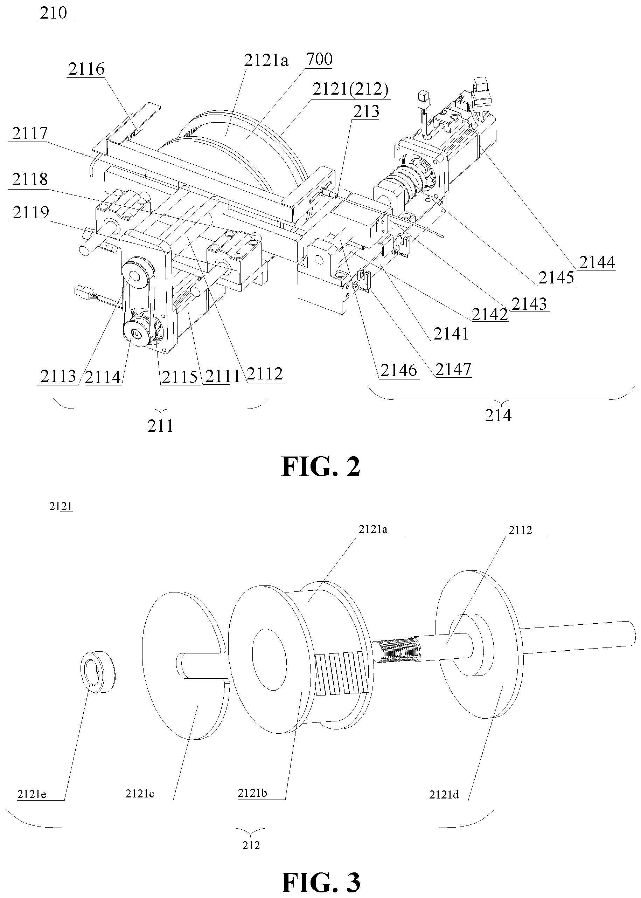

Please refer to FIG. 2 and FIG. 3, FIG. 2 is a schematic diagram of a partial structure of the unwinding mechanism of the adhesive application mechanism shown in FIG. 1a, and FIG. 3 is a schematic structural exploded view of an unwinding reel and an unwinding fixed shaft of the unwinding mechanism shown in FIG. 2.

As shown in FIG. 2, the unwinding mechanism 210 includes an unwinding assembly 211, a reel 212, a first deviation-rectifying detection assembly 213, and a deviation-rectifying drive assembly 214.

The unwinding assembly 211 includes an unwinding motor 2111. The reel 212 includes an unwinding reel 2121 and an adhesive tape roll material 700 that is wound on the unwinding reel 2121 in a staggered manner. The unwinding reel 2121 is connected to the unwinding motor 2111 and rotates under the drive of the unwinding motor 2111.

The unwinding motor 2111 refers to a structural member that provides a driving force to the unwinding reel 2121. Exemplarily, the unwinding motor 2111 is a servo motor. The unwinding motor 2111 is connected to the control assembly, and the control assembly is configured to control the unwinding motor 2111 to work in order to provide a driving force to the unwinding reel 2121.

The unwinding reel 2121 refers to a structural member that provides winding space to the adhesive tape roll material 700. Specifically, a side surface of the unwinding reel 2121 has an annular roll material groove 2121a. The annular roll material groove 2121a refers to an end-to-end groove body formed circumferentially along the side surface of the unwinding reel 2121. The unwinding reel 2121 is of a cylindrical structure, and a groove depth is the same at all points of the annular roll material groove 2121a, forming a circular annular roll material groove 2121a. The annular roll material groove 2121a has no sharp edges, which reduces the possibility of damaging the adhesive tape 701 during the process of winding the adhesive tape roll material 700 onto the annular roll material groove 2121a of the unwinding reel 2121 or releasing the adhesive tape 701 from the adhesive tape roll material 700 in the annular roll material groove 2121a. The adhesive tape 701 of the adhesive tape roll material 700 is spirally wound in the adhesive tape roll material 2121a to form a multi-layer structure. The two adjacent layers of adhesive tapes 701 are staggered, and there are also staggered adhesive tape 701 on the same layer, so as to form an adhesive tape roll material 700 wound on the unwinding reel 2121 in a staggered manner, which increases a length of the adhesive tape 701 that the annular roll material groove 2121a can accommodate. Optionally, when a depth of the annular roll material groove 2121a is constant, a width of the annular roll material groove 2121a is 10 mm-100 mm, a width of the adhesive tape 701 is 3 mm-20 mm, and the length of the adhesive tape 701 that the annular roll material groove 2121a can accommodate is greater than 5000 m.

The unwinding assembly 211 further includes an unwinding fixed shaft 2112, an unwinding synchronous wheel 2113, an unwinding drive wheel 2114, and an unwinding synchronous belt 2115. The unwinding reel 2121 sleeves on the unwinding fixed shaft 2112. One end of the unwinding fixed shaft 2112 has the unwinding synchronous wheel 2113, that is, the end of the unwinding fixed shaft 2112 is connected to the unwinding synchronous wheel 2113. The unwinding drive wheel 2114 and the unwinding synchronous wheel 2113 are connected by the unwinding synchronous belt 2115. The unwinding motor 2111 is connected to the unwinding drive wheel 2114, so as to drive the unwinding fixed shaft 2112 to rotate through the unwinding drive wheel 2114 and the unwinding synchronous wheel 2113. The unwinding fixed shaft 2112 refers to a structural member that drives the unwinding reel 2121 to rotate; the unwinding drive wheel 2114 refers to a structural member that is directly connected to and driven by the unwinding motor 2111; the unwinding synchronous belt 2115 refers to a structural member that enables the unwinding synchronous wheel 2113 and the unwinding drive wheel 2114 to be in synchronous transmission; and the unwinding synchronous wheel 2113 refers to a structural member that drives the unwinding fixed shaft 2112 and the unwinding drive wheel 2114 to rotate synchronously.

The unwinding motor 2111 provides a driving force, which drives the unwinding drive wheel 2114 to rotate. The unwinding synchronous wheel 2113 rotates with the unwinding drive wheel 2114 under the drive of the unwinding synchronous belt 2115. The unwinding fixed shaft 2112 rotates under the drive of the unwinding synchronous wheel 2113, thereby realizing the rotation of the unwinding reel 2121 sleeved on the unwinding fixed shaft 2112. The rotation of the unwinding reel 2121 releases the adhesive tape 701 wound on the unwinding reel 2121. Through the cooperation between the unwinding motor 2111, the unwinding synchronous wheel 2113, the unwinding drive wheel 2114, the unwinding synchronous belt 2115, and the unwinding fixed shaft 2112, the unwinding motor 2111 drives the unwinding reel 2121 to rotate, and the rotation of a drive shaft of the unwinding motor 2111 and the rotation of the unwinding reel 2121 are well synchronized.

As shown in FIG. 3, the unwinding reel 2121 includes a wrapping member 2121b, a first fixing sheet 2121c, and a second fixing sheet 2121d. The wrapping member 2121b is of a circular cylindrical structure, and an annular groove is formed in a side surface of the wrapping member 2121b in its circumferential direction. The annular groove serves as the annular roll material groove 2121a. The first fixing sheet 2121c and the second fixing sheet 2121d are respectively arranged on two opposite sides of the wrapping member 2121b. The unwinding fixed shaft 2112 penetrates through the second fixing sheet 2121d, the wrapping member 2121b, and the first fixing sheet 2121c in sequence. A fixing ring 2121e is arranged on one side of the first fixing sheet 2121c away from the second fixing sheet 2121d, and the fixing ring 2121e sleeves on the unwinding fixed shaft 2112 to fix a position of the unwinding reel 2121 on the unwinding fixing shaft 2112.

The unwinding mechanism 210 further includes a material detection sensor 2116, and the material detection sensor 2116 is configured to detect the remaining situation of the adhesive tape roll material 700. By arranging the material detection sensor 2116, the remaining situation of the adhesive tape roll material 700 may be monitored in real time, and a moment when the adhesive tape roll material 700 is about to run out or is used up may be detected in time, which is conducive to issuing an alarm prompt in a timely manner. This greatly reduces the probability of the electrode plate being missed when passing through the adhesive application device and increases the adhesive application yield. Optionally, the material detection sensor 2116 is a photoelectric sensor, which can monitor a state of the remaining material in real time; wherein, the photoelectric sensor refers to a structural member that converts a light signal into an electrical signal. Optionally, the unwinding mechanism 210 further includes an alarm member (not shown). The alarm member is connected to the material detection sensor 2116. When the material detection sensor 2116 detects that the remaining amount of the adhesive tape roll material 700 is less than or equal to a threshold, the alarm member emits at least one of the following alarm prompts: sound, light, or electricity. The control assembly is configured to control the alarm member to issue an alarm prompt according to a detection structure of the material detection sensor 2116.

The first deviation-rectifying detection assembly 213 is configured to detect a position offset situation of the adhesive tape 701 released by the unwinding assembly 211 when the adhesive tape leaves the adhesive tape roll material 700. In other words, the first deviation-rectifying detection assembly 213 is configured to detect a position offset situation of the adhesive tape 701 released by the unwinding motor 2111 driving the unwinding reel 2121 to rotate when the adhesive tape leaves the adhesive tape roll material 700.

The deviation-rectifying drive assembly 214 is connected to the unwinding reel 2121; and the deviation-rectifying drive assembly 214 is configured to drive the unwinding reel 2121 to move axially according to the position offset situation of the adhesive tape 701 when it leaves the adhesive tape roll material 700, so as to rectify the deviation of the adhesive tape 701.

The first deviation-rectifying detection assembly 213 and the deviation-rectifying drive assembly 214 are respectively connected to the control assembly. The control assembly is configured to receive the position offset situation of the adhesive tape 701 when it leaves the adhesive tape roll material 700 detected by the first deviation-rectifying detection assembly 213, and control the deviation-rectifying drive assembly 214 to drive the unwinding reel 2121 to move axially according to the position offset situation of the adhesive tape 701 when it leaves the adhesive tape roll material 700, so as to rectify the deviation of the adhesive tape 701.

Since the adhesive tape roll material 700 is wound on the unwinding reel 2121 in a staggered manner, the position of the released adhesive tape 701 when it leaves the adhesive tape roll material 700 will continuously swing in the axial direction of the unwinding reel 2121.

A transport path corresponding to a transport pate of the electrode plate after the adhesive tape 701 is released from the unwinding reel 2121 is defined as a preset path. The first deviation-rectifying detection assembly 213 detects whether the transport path of the adhesive tape 701 released from the unwinding reel 2121 is consistent with the preset path. If they are inconsistent, the deviation-rectifying drive assembly 214 drives, according to an offset direction and offset amount of the transport path of the adhesive tape 701 detected by the first deviation-rectifying detection assembly 213 and the preset path, the unwinding reel 2121 to move axially in an opposite direction of the unwinding reel 2121 to compensate. That is, the unwinding reel 2121 is driven to move axially in the opposite direction of the offset by the corresponding offset amount to rectify the deviation of the adhesive tape 701, and accurately control the consistency of the transport path of the adhesive tape 701 released from the unwinding reel 2121, so that the adhesive tape 701 is aligned during unwinding. Specifically, the control assembly controls the deviation-rectifying drive assembly 214 to drive the unwinding reel 2121 to move axially in the opposite direction of the offset by the corresponding offset amount.

In an implementation, the deviation-rectifying drive assembly 214 drives the unwinding reel 2121 to move axially by a range greater than or equal to the width of the adhesive tape 701, so that the adhesive tape 701, on the unwinding reel 2121, wound at different positions in the axial direction of the unwinding reel 2121 can be aligned with the preset path after being released, and the adhesive tape 701 wound on the unwinding reel 2121 can be fully unwound.

The deviation-rectifying drive assembly 214 includes a pedestal 2141, a guide rail 2142, a slider 2143, and a deviation-rectifying motor 2144. The deviation-rectifying motor 2144 is connected to the control assembly to drive the unwinding reel 2121 to move axially and rectify the deviation of the adhesive tape 701. The first deviation-rectifying detection assembly 213 is arranged on the deviation-rectifying drive assembly 214. Optionally, the first deviation-rectifying detection assembly 213 is arranged on the pedestal 2141. The position of the first deviation-rectifying detection assembly 213 is fixed so as to detect whether the adhesive tape 701 is offset at the same position. The guide rail 2142 is arranged on the pedestal 2141. The slider 2143 is slidably arranged on the guide rail 2142, and the slider 2143 is connected to the unwinding assembly 211. The deviation-rectifying motor 2144 is arranged on the pedestal 2141 and is connected to the slider 2143. The deviation-rectifying motor 2144 drives the unwinding assembly 211 to move via the slider 2143, thereby driving the unwinding reel 2121 to move axially. The pedestal 2141 refers to a structural member that plays a role in supporting the slider 2143; the guide rail 2142 refers to a structural member that guides the movement of the slider 2143; the slider 2143 refers to a structural member that may move relative to the pedestal 2141 and is connected to the unwinding assembly 211; and the deviation-rectifying motor 2144 refers to a structural member that provides a driving force for the movement of the slider 2143. Through cooperation of the pedestal 2141, the guide rail 2142, the slider 2143, and the deviation-rectifying motor 2144, the unwinding reel 2121 is drive to move axially, andthe alignment of the adhesive tape 701 is maintained during unwinding.

The adhesive tape 701 is wound on the unwinding reel 2121 in a staggered manner. The first deviation-rectifying detection assembly 213 detects that the adhesive tape 701 offsets at a position where it leaves the adhesive tape roll material 700. The control assembly controls the deviation-rectifying motor 2144 to rotate. The deviation-rectifying motor 2144 drives the slider 2143 to move, the slider 2143 in turn drives the unwinding assembly 211 to move, so that the unwinding reel 2121 moves along its own axial direction. This precisely controls the position of the unwinding reel 2121 and achieves accurate reel-to-reel unwinding of the adhesive tape. A closed loop is formed between the first deviation-rectifying detection assembly 213 and the deviation-rectifying motor 2144 to maintain the alignment of the adhesive tape 701 with the preset path during unwinding and the consistency of the unwinding position of the adhesive tape 701.

In an implementation, a groove extending in a straight line is formed in the pedestal 2141, the groove serves as the guide rail 2142, the slider 2143 is provided with a protrusion corresponding to the groove, and the protrusion is embedded in the groove to slide.

In an implementation, a protruding block extending in a straight line is formed on the pedestal 2141, the protruding block serves as the guide rail 2142, the slider 2143 is provided with a chute corresponding to the protruding block, and the chute is clamped on the protruding block to slide.

In an implementation, the deviation-rectifying motor 2144 is a servo motor.

The deviation-rectifying drive assembly 214 further includes a first motor coupling 2145 and a first lead screw 2146. The deviation-rectifying motor 2144 is connected to the first lead screw 2146 through the first motor coupling 2145. The slider 2143 sleeves on the first lead screw 2146. The driving force of the deviation-rectifying motor 2144 is transferred to the slider 2143 through the first motor coupling 2145 and the first lead screw 2146, so as to drive the slider 2143 to slide along the first lead screw 2146. The first motor coupling 2145 refers to a structural member that connects the deviation-rectifying motor 2144 and the first lead screw 2146, so that a drive shaft of the deviation-rectifying motor 2144 and the lead screw rotate together to transfer torque; and the first lead screw 2146 refers to a structural member that converts a rotational motion into a linear motion, so that the slider 2143 moves in a straight line.

The deviation-rectifying drive assembly 214 further includes two first sensors 2147, and the two first sensors 2147 are spaced apart on the pedestal 2141. The slider 2143 slides between the two first sensors 2147. Optionally, the first sensors 2147 are photoelectric sensors, wherein the photoelectric sensor refers to a structural member that converts a light signal into an electrical signal. The first sensors 2147 are configured to control a maximum range of movement of the slider 2143, thereby achieving precise control over the consistency of the transport path of the adhesive tape 701 released from the unwinding reel 2121, with the adhesive tape 701 aligned with the preset path during unwinding. The first sensors 2147 are used to detect the movement range of the slider 2143, thereby controlling the movement range of the slider 2143, which helps to improve the degree of automation and improve the efficiency of adhesive application. The first sensors 2147 are connected to the control assembly.

Referring again to FIG. 2, the unwinding mechanism 210 further includes an unwinding connecting block 2117, a bearing rod 2118, and a bearing seat 2119. The unwinding connecting block 2117 is connected to the unwinding reel 2121 and the slider 2143 respectively. The bearing rod 2118 is connected to the unwinding connecting block 2117. The bearing seat 2119 sleeves on the bearing rod 2118. The sliding of the slider 2143 drives the unwinding reel 2121 to move along its axis via the unwinding connecting block 2117 and the bearing rod 2118, and the unwinding reel 2121 moves in a straight line. The unwinding connecting block 2117 refers to a structural member that enables the unwinding reel 2121 and the slider 2143 to move synchronously; the bearing rod 2118 refers to a structural member that guides the movement of the unwinding reel 2121; and the bearing seat 2119 refers to a structural member that fixes the bearing rod 2118.

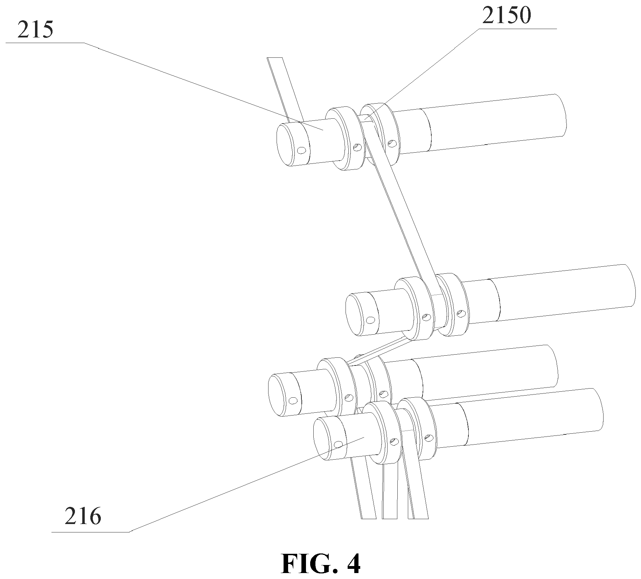

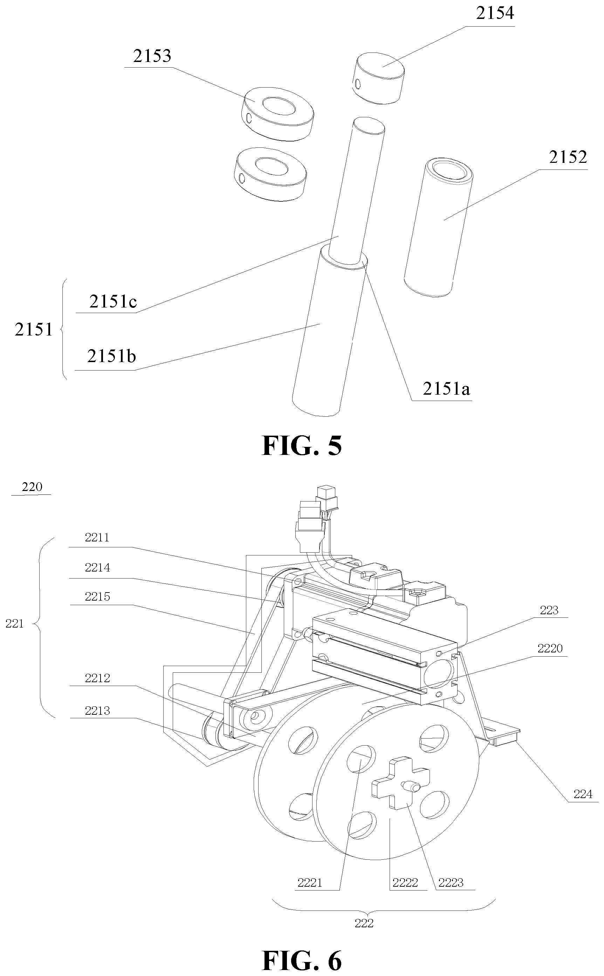

Please refer to FIG. 4 and FIG. 5, FIG. 4 is schematic structural diagram of a deviation-rectifying guide wheel assembly and a positioning guide wheel assembly of the unwinding mechanism shown in FIG. 1a, and FIG. 5 is a schematic structural exploded view of the deviation-rectifying guide wheel assembly shown in FIG. 4.

In an implementation, the unwinding mechanism 210 further includes a plurality of deviation-rectifying guide wheel assemblies 215 and a plurality of positioning guide wheel assemblies 216. Both the deviation-rectifying guide wheel assemblies 215 and the positioning guide wheel assemblies 216 are located downstream of the transport path of the adhesive tape 701 released from the adhesive tape roll material 700 of the unwinding reel 2121. The plurality of deviation-rectifying guide wheel assemblies 215 and the plurality of positioning guide wheel assemblies 216 are arranged sequentially along the transport path of the adhesive tape 701. That is, the adhesive tape 701 passes through the plurality of deviation-rectifying guide wheel assemblies 215 before passing through the plurality of positioning guide wheel assemblies 216. The deviation-rectifying guide wheel assemblies 215 and the positioning guide wheel assemblies 216 are cooperated to rectify the deviation in the transport of the adhesive tape 701. The deviation-rectifying guide wheel assemblies 215 and the positioning guide wheel assemblies 216 each refer to a structural member that guides the transport of the adhesive tape 701.

A circumferential side surface of the deviation-rectifying guide wheel assembly 215 has an annular limiting groove 2150; and the annular limiting groove 2150 refers to a part on the deviation-rectifying guide wheel assembly 215 where the adhesive tape 701 is arranged. Specifically, the deviation-rectifying guide wheel assembly 215 includes a support shaft 2151, a bearing 2152, two adjusting rings 2153, and a limiting member 2154. A side surface of the support shaft 2151 has a limiting portion 2151a. The bearing 2152 sleeves on the support shaft 2151. The limiting portion 2151a limits a position of the bearing 2152 on the support shaft 2151. The two adjusting rings 2153 and the bearing 2152 are cooperated to form an annular limiting groove 2150. The two adjusting rings 2153 sleeve on the bearing 2152 in a spaced manner with an adjustable spacing, so that a width of the annular limiting groove 2150 may be adapted to adhesive tapes 701 of different widths, or widths of the annular limiting grooves 2150 of the different deviation-rectifying guide wheel assemblies 215 may be different, to adapt to a swing amplitude of the adhesive tape 701 at different transport path positions. The limiting member 2154 is arranged on the support shaft 2151 and located on one side of the bearing 2152 away from the limiting portion 2151a; a spacing between the limiting member 2154 and the limiting portion 2151a is adjustable, thereby adjusting the maximum axial swing amplitude of the bearing 2152 on the support shaft 2151, so as to adapt to the swing amplitude of the adhesive tape 701 at different transport path positions. In addition, by arranging the limiting member 2154 on one side of the bearing 2152 away from the limiting portion 2151a, the bearing 2152 is maintained to always sleeve on the support shaft 2151, preventing the bearing 2152 from falling off the support shaft 2151.

Optionally, the support shaft 2151 includes a first cylinder 2151b and a second cylinder 2151c which are interconnected and coaxially arranged, and a radius of the first cylinder 2151b is greater than a radius of the second cylinder 2151c. Since the radius of the first cylinder 2151b is different from that of the second cylinder 2151c, the limiting portion 2151a is formed at a connection between the first cylinder 2151b and the second cylinder 2151c. When the bearing 2152 sleeves on the support shaft 2151, an end of the bearing 2152 abuts against an end surface of the first cylinder 2151b close to the second cylinder 2151c, thereby limiting the bearing 2152.

A circumferential side surface of the positioning guide wheel assembly 216 has an annular limiting groove; and the annular limiting groove refers to a part on the positioning guide wheel assembly 216 where the adhesive tape 701 is arranged. Specifically, the positioning guide wheel assembly 216 includes a support shaft, a bearing, two adjusting rings, and a limiting member. A structure of the positioning guide wheel assembly 216 is similar to that of the deviation-rectifying guide wheel assembly 215, which may refer to the above introduction of the structure of the deviation-rectifying guide wheel assembly 215, and will not be repeated here.

It is understandable that, due to the limited precision of the first deviation-rectifying detection assembly 213 and the deviation-rectifying drive assembly 214 in cooperating to rectify the deviation, the adhesive tape 701 released from the unwinding reel 2121 will swing in the axial direction of the unwinding reel 2121. Further deviation rectifying is performed by arranging the deviation-rectifying guide wheel assembly 215. Therefore, along the transport path of the adhesive tape 701, from the unwinding reel 2121 to the first positioning guide wheel assembly 216, the swing amplitude of the tape 701 gradually decreases, maintaining alignment during unwinding.

In an implementation, the deviation-rectifying guide wheel assembly 215 is configured to swing along its own axial direction; the positioning guide wheel assembly 216 is configured to be fixed in position along its own axial direction; and the annular limiting groove 2150 in the deviation-rectifying guide wheel assembly 215 has the same width as the annular limiting groove in the positioning guide wheel assembly 216. Along the transport path of the adhesive tape 701, the swing amplitude of the plurality of deviation-rectifying guide wheel assemblies 215 gradually decreases, adapting to the swing amplitude trend of the adhesive tape 701, thereby gradually rectifying the transport deviation of the adhesive tape 701, making the adhesive tape 701 high in position consistency and stable in operation during the movement, and reducing the risk of breakage of the adhesive tape 701. The deviation-rectifying guide wheel assembly 215 is configured to swing along its own axial direction, meaning that the annular limiting groove 2150 swings in the axial direction of the deviation-rectifying guide wheel assembly 215. For example, the deviation-rectifying guide wheel assembly may swing on the support shaft 2151 between the limiting member 2154 and the limiting portion 2151a in the axial direction of the support shaft 2151 via the bearing 2152, with the distance between the two adjusting rings 2153 being constant. Exemplarily, the unwinding mechanism 210 further includes a plurality of deviation-rectifying guide wheel assemblies 215 and one positioning guide wheel assembly 216. The adhesive tape 701 passes through the plurality of deviation-rectifying guide wheel assemblies 215 before passing through the positioning guide wheel assembly 216, and the swing amplitude of the plurality of deviation-rectifying guide wheel assemblies 215 gradually decreases along the transport path of the adhesive tape 701. If there are a plurality of positioning guide wheel assemblies 216, each of the plurality of positioning guide wheel assemblies 216 is configured to be fixed in position along its own axial direction. For example, the bearing 2152 of the positioning guide wheel assembly 216 cannot swing on the supporting shaft 2151 between the limiting member 2154 and the limiting portion 2151a in the axial direction of the supporting shaft 2151.

In an implementation, the positioning guide wheel assembly 216 is configured to be fixed in position along its own axial direction; the deviation-rectifying guide wheel assembly 215 is configured to be fixed in position along its own axial direction; and a center of the annular limiting groove of the positioning guide wheel assembly 216 is aligned with a center of the annular limiting groove of the deviation-rectifying guide wheel assembly 215. Along the transport path of the adhesive tape 701, the widths of the annular limiting grooves of the plurality of deviation-rectifying guide wheel assemblies 215 and the plurality of positioning guide wheel assemblies 216 gradually decreases, adapting to the swing amplitude trend of the adhesive tape 701, thereby rectifying the transport deviation of the adhesive tape 701, making the adhesive tape 701 high in position consistency and stable in operation during the movement, and reducing the risk of breakage of the adhesive tape 701. Exemplarily, the unwinding mechanism 210 further includes a plurality of deviation-rectifying guide wheel assemblies 215 and one positioning guide wheel assembly 216. The adhesive tape 701 passes through the plurality of deviation-rectifying guide wheel assemblies 215 before passing through the positioning guide wheel assembly 216, the widths of the annular limiting grooves 2150 of the plurality of deviation-rectifying guide wheel assemblies 215 gradually decrease along the transport path of the adhesive tape 701, and the width of the annular limiting groove of the positioning guide wheel assembly 216 decreases relative to the width of the annular limiting groove 2150 of the last deviation-rectifying guide wheel assembly 215 through which the adhesive tape 701 passes. If there are the plurality of positioning guide wheel assemblies 216, the widths of the annular limiting grooves of the plurality of positioning guide wheel assemblies 216 are the same.

By arranging the deviation-rectifying guide wheel assembly 215 and the positioning guide wheel assembly 216 downstream of a release transport path the adhesive tape roll material 700 of the unwinding reel 2121, the deviation of the adhesive tape 701 released by the unwinding reel 2121 is rectified, so that the adhesive tape 701 released by the unwinding mechanism 210 is high in position consistency and stable in operation, thereby improving the accuracy of subsequent alignment of adhesive application and reducing the risk of breakage of the adhesive tape 701.

The unwinding mechanism 210 achieves accurate reel-to-reel unwinding of the adhesive tape, and the deviation-rectifying guide wheel assembly 215 and the positioning guide wheel assembly 216 are cooperated for unwinding, so as to improve the diagonal precision of unwinding of the adhesive tape.

Please refer to FIG. 6, FIG. 6 is a schematic diagram of a partial structure of a winding mechanism of the adhesive application mechanism shown in FIG. 1a.

The winding mechanism 220 includes a winding assembly 221, a winding reel 222, and a misalignment drive assembly 223.

The winding reel 222 refers to a structural member that provides winding space to a release film 7013 of the adhesive tape 701. Specifically, the winding reel 222 has an annular winding groove 2220; and the annular winding groove 2220 refers to an end-to-end groove body formed circumferentially along a side surface of the winding reel 222. The winding reel 222 is of a cylindrical structure, and a groove depth of the annular winding groove 2220 is the same at all points, forming a circular annular winding groove 2220. The release film 7013 of the adhesive tape 701 is spirally wound in the annular winding groove 2220 to form a multi-layer structure. The adjacent two layers of release films 7013 are staggered, and there are also adhesive tape release films 7013 that are staggered on the same layer. That is, the release film 7013 is and wound on the winding reel 222 in a staggered manner, which increases the length of the release film 7013 that the annular winding groove 2220 can accommodate.

The winding reel 222 includes a rotating shaft 2221 and two winding discs 2222, and the two winding discs 2222 are respectively arranged at both ends of the rotating shaft 2221. The rotating shaft 2221 is of a cylindrical structure, and the winding discs 2222 are each of a wafer structure. The winding discs 2222 and the rotating shaft 2221 are coaxially arranged, and a diameter of the winding discs 2222 is greater than a diameter of the rotating shaft 2221. The two winding discs 2222 and the rotating shaft 2221 define to form the annular winding groove 2220. The winding reel 222 further include a fixing member 2223, and the fixing member 2223 is arranged on one side of one winding disc 2222 facing away from the other winding disc 2222, thereby fixedly positioning the position of the winding discs 2222 on the rotating shaft 2221.

The winding assembly 221 includes a winding motor 2211. The winding reel 222 is connected to the winding motor 2211 and rotate under the drive of the winding motor 2211. The winding motor 2211 refers to a structural member that provides a driving force to the winding reel 222. Exemplarily, the winding motor 2211 is a servo motor. The winding motor 2211 is connected to the control assembly, and the control assembly is configured to control the winding motor 2211 to work in order to provide a driving force to the winding reel 222.

The winding assembly 221 further includes a winding fixed shaft 2212, a winding synchronous wheel 2213, a winding drive wheel 2214, and a winding synchronous belt 2215. The winding reel 222 sleeves on the winding fixed shaft 2212. One end of the winding fixed shaft 2212 has the winding synchronous wheel 2213, that is, the end of the winding fixed shaft 2212 is connected to the winding synchronous wheel 2213. The winding drive wheel 2214 and the winding synchronous wheel 2213 are connected by the winding synchronous belt 2215. The winding motor 2211 is connected to the winding drive wheel 2214, so as to drive the winding fixed shaft 2212 to rotate through the winding drive wheel 2214 and the winding synchronous wheel 2213. The winding fixed shaft 2212 refers to a structural member that drives the winding reel 222 to rotate; the winding drive wheel 2214 refers to a structural member that is directly connected to and driven by the winding motor 2211; the winding synchronous belt 2215 refers to a structural member that enables the winding synchronous wheel 2213 and the winding drive wheel 2214 to be in synchronous transmission; and the winding synchronous wheel 2213 refers to a structural member that drives the winding fixed shaft 2212 and the winding drive wheel 2214 to rotate synchronously.

The winding motor 2211 provides a driving force, which drives the winding drive wheel 2214 to rotate. The winding synchronous wheel 2213 rotates with the winding drive wheel 2214 under the drive of the winding synchronous belt 2215. The winding fixed shaft 2212 rotates under the drive of the winding synchronous wheel 2213, thereby realizing the rotation of the winding reel 222 sleeving on the winding fixed shaft 2212. The rotation of the winding reel 222 causes the release film 7013 of the adhesive tape 701 to wind around the annular winding groove 2220 of the winding reel 222, so as to realize winding. Through the cooperation between the winding motor 2211, the winding synchronous wheel 2213, the winding drive wheel 2214, the winding synchronous belt 2215, and the winding fixed shaft 2212, the winding motor 2211 drives the winding reel 222 to rotate, and the rotation of a drive shaft of the winding motor 2211 and the rotation of the winding reel 222 are well synchronized.

The misalignment drive assembly 223 is connected to the winding reel 222, and the misalignment drive assembly 223 is configured to drive the winding reel 222 to move back and forth along its own axial direction. Specifically, the misalignment drive assembly 223 is connected to the winding assembly 221. By driving the entire winding assembly 221 and the winding reel 222 to move together, the winding reel 222 can move back and forth along its own axial direction. The misalignment drive assembly 223 refers to a structural member that drives the winding reel 222 to move along its own axial direction. Exemplarily, the misalignment drive assembly 223 includes an air cylinder. The control assembly is configured to control the misalignment drive assembly 223 to drive the winding reel 222 to move back and forth along its own axial direction.

By arranging the misalignment drive assembly 223 to drive the winding reel 222 to move back and forth along its own axial direction, the release film 7013 may be wound on the winding reel 222 in a staggered manner, which is conducive to achieving uniform distribution of the release film 7013 on the winding reel 222,realizing accurate reel-to-reel winding, and increasing the length of the release film 7013 that the annular winding groove 2220 of the winding reel 222 can accommodate.

In an implementation, the misalignment drive assembly 223 drives the winding reel 222 to move back and forth in the axial direction by an amplitude that is an integer multiple of and at least twice the width of the release film 7013 of the adhesive tape 701, so that at least two turns of release film 7013 can be completely wound on the winding reel 222 in a staggered manner. This facilitates increasing the length of the release film 7013 that the annular winding groove 2220 of the winding reel 222 can accommodate, reduces the frequency of cleaning the release film 7013 wound on the winding reel 222, and enhances the automated adhesive application process.

In an implementation, the width of the annular winding groove 2220 is an integer multiple of and at least twice the width of the release film 7013 of the adhesive tape 701, so that at least two turns of release film 7013 can be completely wound on the winding reel 222 in a staggered manner. This facilitates increasing the length of the release film 7013 that the annular winding groove 2220 of the winding reel 222 can accommodate, reduces the frequency of cleaning the release film 7013 wound on the winding reel 222, and enhances the automated adhesive application process.

In an implementation, the winding mechanism 220 further includes a substrate detection sensor 224, and the substrate detection sensor 224 is configured to detect a situation of the release film 7013 wound on the winding reel 222. By arranging the substrate detection sensor 224, the situation of the release film 7013 wound on the winding reel 222 can be monitored in real time, a situation that the winding reel 222 is about to be or has already been fully wrapped with the release film 7013 is discovered timely, which is conducive to issuing an alarm prompt in a timely manner. This greatly reduces the impact of the release film 7013 on the adhesive application process and increases the adhesive application yield. Optionally, the winding mechanism 220 further includes an alarm member (not shown). The alarm member is connected to the substrate detection sensor 224. When the substrate detection sensor 224 detects that the release film 7013 wound on the winding reel 222 is greater than or equal to a threshold, the alarm member emits at least one of the following alarm prompts: sound, light, or electricity. The control assembly is configured to control the alarm member to issue an alarm prompt according to a detection structure of the substrate detection sensor 224.

In an implementation, the winding mechanism 220 further includes a plurality of positioning guide wheel assemblies 216 and a plurality of deviation-rectifying guide wheel assemblies 215 (referring to FIG. 4 and FIG. 5). Both the deviation-rectifying guide wheel assemblies 215 and the positioning guide wheel assemblies 216 are located upstream of a transport path of the release film 7013 of the winding reel 222. The plurality of positioning guide wheel assemblies 216 and the plurality of deviation-rectifying guide wheel assemblies 215 are arranged sequentially along the transport path of the release film 7013 of the adhesive tape 701. That is, the release film 7013 of the adhesive tape 701 passes through the plurality of positioning guide wheel assemblies 216 before passing through the plurality of deviation-rectifying guide wheel assemblies 215. The deviation-rectifying guide wheel assembly 215 and the positioning guide wheel assembly 216 each refer to a structural member that guides the transport of the release film 7013. It is understandable that, since the release film 7013 is wound on the winding reel 222 in a staggered manner, the swing amplitude of the release film 7013 gradually increases from the positioning guide wheel assembly 216 to the winding reel 222 along the transport path of the release film 7013.

By arranging the deviation-rectifying guide wheel assembly 215 and the positioning guide wheel assembly 216 upstream of the transport path of the release film 7013 of the winding reel 222, the release film 7013 may be wound on the winding reel 222 in a staggered manner, and the release film 7013 is evenly distributed on the winding reel 222, based on the high consistency of the position of the release film 7013 during the transport process before entering the winding mechanism 220.

The specific structures of the deviation-rectifying guide wheel assembly 215 and the positioning guide wheel assembly 216 may refer to the detailed structural introduction of the deviation-rectifying guide wheel assembly 215 and the positioning guide wheel assembly 216 in the unwinding mechanism 210, and will not be repeated here.

In an implementation, the deviation-rectifying guide wheel assembly 215 is configured to swing along its own axial direction; the positioning guide wheel assembly 216 is configured to be fixed in position along its own axial direction; and the annular limiting groove 2150 in the deviation-rectifying guide wheel assembly 215 has the same width as the annular limiting groove in the positioning guide wheel assembly 216. Along the transport path of the release film 7013 of the adhesive tape 701, the swing amplitude of the plurality of deviation-rectifying guide wheel assemblies 215 gradually increases. Exemplarily, the winding mechanism 220 further includes a plurality of deviation-rectifying guide wheel assemblies 215 and one positioning guide wheel assembly 216. The release film 7013 of the adhesive tape 701 passes through the positioning guide wheel assembly 216 before passing through the plurality deviation-rectifying guide wheel assemblies 215, and the swing amplitude of the plurality of deviation-rectifying guide wheel assemblies 215 gradually increases along the transport path of the release film 7013 of the adhesive tape 701, adapting to the swing amplitude trend of the release film 7013. By configuring the deviation-rectifying guide wheel assembly 215 and the positioning guide wheel assembly 216 as described above, the release film 7013 of the adhesive tape 701 is high in position consistency and stable in operation during the transport process before entering the winding mechanism 220, reducing the risk of breakage of the release film 7013, and the release film 7013 may be wound on the winding reel 222 in a staggered manner.

In an implementation, the positioning guide wheel assembly 216 is configured to be fixed in position along its own axial direction; the deviation-rectifying guide wheel assembly 215 is configured to be fixed in position along its own axial direction; and a center of the annular limiting groove of the positioning guide wheel assembly 216 is aligned with a center of the annular limiting groove of the deviation-rectifying guide wheel assembly 215. Along the transport path of the release film 7013 of the adhesive tape 701, the widths of the plurality of positioning guide wheel assemblies 216 and the plurality of deviation-rectifying guide wheel assemblies 215 gradually increase. Exemplarily, the winding mechanism 220 further includes a plurality of deviation-rectifying guide wheel assemblies 215 and one positioning guide wheel assembly 216. The adhesive tape 701 passes through the positioning guide wheel assembly 216 before passing through the plurality of deviation-rectifying guide wheel assemblies 215, the widths of the annular limiting grooves 2150 of the plurality of deviation-rectifying guide wheel assemblies 215 gradually increase along the transport path of the release film 7013 of the adhesive tape 701, and the width of the annular limiting groove of the positioning guide wheel assembly 216 decreases relative to the width of the annular limiting groove 2150 of the first deviation-rectifying guide wheel assembly 215 through which the release film 7013 of the adhesive tape 701 passes, adapting to the swing amplitude trend of the release film 7013. By configuring the deviation-rectifying guide wheel assembly 215 and the positioning guide wheel assembly 216 as described above, the release film 7013 of the adhesive tape 701 is high in position consistency and stable in operation during the transport process before entering the winding mechanism 220, reducing the risk of breakage of the release film 7013, and the release film 7013 may be wound on the winding reel 222 in a staggered manner.

Referring again to FIG. 1a, the adhesive application mechanism 200 further includes an unwinding swing roller assembly 230. The unwinding swing roller assembly 230 is arranged on the transport path of the adhesive tape 701. The unwinding swing roller assembly 230 is located downstream of the unwinding mechanism 210. The unwinding swing roller assembly 230 is electrically connected to the unwinding motor 2111. The unwinding motor 2111 is configured to control an unwinding speed of the unwinding reel 2121 according to a tension fed back by the unwinding swing roller assembly 230. Optionally, the unwinding swing roller assembly 230 is configured to feed the tension of the adhesive tape 701 released by the unwinding assembly 211 back to the control assembly; and the control assembly is configured to receive the tension fed back by the unwinding swing roller assembly 230, and control the driving force provided by the unwinding motor 2111 to the unwinding reel 2121 according to the feedback tension information, thereby controlling the unwinding speed of the unwinding reel 2121.

The unwinding swing roller assembly 230 refers to a structural member that can detect the tension of the adhesive tape 701 and provide feedback on the tension of the adhesive tape 701. By arranging the unwinding swing roller assembly 230, the unwinding swing roller assembly 230 and the unwinding motor 2111 form a closed loop, so as to control the transport speed of the adhesive tape 701 of the entire adhesive application mechanism 200, and maintain smooth unwinding, thereby facilitating the automatic adhesive application to achieve a good adhesive application effect.

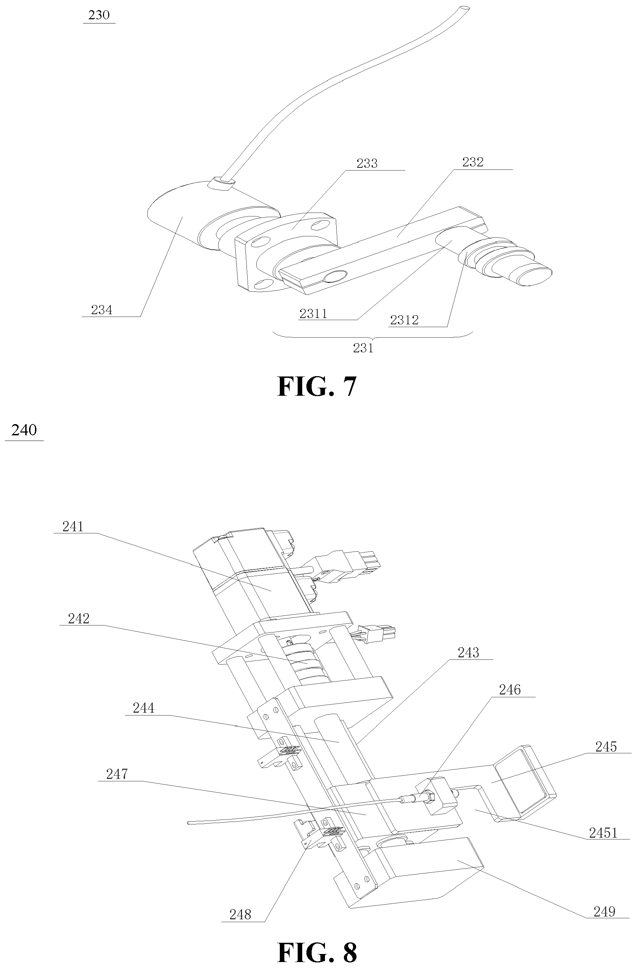

Please refer to FIG. 7, FIG. 7 is a schematic structural diagram of an unwinding swing roller assembly of the adhesive application mechanism shown in FIG. 1a.

The unwinding swing roller assembly 230 includes an adhesive tape positioning swing roller 231, a swing roller connecting block 232, a swing roller bearing seat 233, and a signal converter 234. The adhesive tape 701 passes through the adhesive tape positioning swing roller 231. Two ends of the swing roller connecting block 232 are respectively connected to the adhesive tape positioning swing roller 231 and the swing roller bearing seat 233. The signal converter 234 is connected to the swing roller bearing seat 233. The signal converter 234 refers to equipment that converts angular or linear displacement into a signal form that can be communicated, transmitted, and stored. Optionally, the signal converter 234 is further connected to the control assembly.

The adhesive tape positioning swing roller 231 includes a first rubber roll 2311 and two first limiting sheets 2312. The two first limiting sheets 2312 sleeve on the first rubber roll 2311 at intervals. The two first limiting sheets 2312 cooperate with the first rubber roll 2311 to define and form an annular accommodating groove, and the adhesive tape 701 is placed in the annular accommodating groove. When the adhesive tape 701 passes through the adhesive tape positioning swing roller 231, the tension of the adhesive tape 701 is different, and a pressing force on the adhesive tape positioning swing roller 231 is different, which in turn causes the angle of the adhesive tape positioning swing roller 231 to change. In one embodiment, the adhesive tape positioning swing roller 231 may be a deviation-rectifying guide wheel assembly 215.

As the adhesive tape 701 passes through the adhesive tape positioning swing roller 231, the angle of the adhesive tape positioning swing roller 231 changes. The signal converter 234 detects the angle change of the adhesive tape positioning swing roller 231 through the swing roller bearing seat 233 and the swing roller connecting block 232, and feeds the angle change of the adhesive tape positioning swing roller 231 back to the control assembly. The control assembly controls the driving force provided by the unwinding motor 2111 to the unwinding reel 2121 according to the angle change information, so that a closed loop is formed between the unwinding swing roller assembly 230 and the unwinding motor 2111.

Referring again to FIG. 1a, the adhesive application mechanism 200 further includes a second deviation-rectifying detection assembly 240. The second deviation-rectifying detection assembly 240 is arranged on the transport path of the adhesive tape 701 and electrically connected to the control assembly. The second deviation-rectifying detection assembly 240 is configured to detect the position offset situation of the adhesive tape 701 during the transport process and feed the position offset situation back to the control assembly. The control assembly controls the deviation-rectifying drive assembly 214 to drive the unwinding reel 2121 to move along its own axial direction according to the position offset situation of the adhesive tape 701 during the transport process, so as to rectify the deviation of the adhesive tape 701 and accurately control the consistency of the transport path of the adhesive tape 701 released from the unwinding reel 2121, thereby maintaining the alignment of the adhesive tape 701 during unwinding.

The second deviation-rectifying detection assembly 240 is located downstream of the unwinding mechanism 210. Optionally, the second deviation-rectifying detection assembly 240 is located downstream of the unwinding swing roller assembly 230. Based on the unwinding mechanism 210 having the first deviation-rectifying detection assembly 213, a second deviation-rectifying detection assembly 240 is arranged to further improve the consistency of the transport path of the adhesive tape 701 released from the unwinding reel 2121, which is conducive to maintaining the alignment of the adhesive tape 701 during unwinding.

Please refer to FIG. 8, FIG. 8 is a schematic structural diagram of a second deviation-rectifying detection assembly of the adhesive application mechanism shown in FIG. 1a.

The second deviation-rectifying detection assembly 240 includes a mobile motor 241, a second motor coupling 242, an optical axis positioning column 243, a second lead screw 244, a signal feedback board 245, an adhesive tape sensor 246, a linear bearing 247, second sensors 248, and a base 249.

The signal feedback board 245 refers to a structural member that forms an adhesive tape detection zone. The signal feedback board 245 is provided with a notch 2451, and the notch 2451 forms the detection zone of the adhesive tape 701. Specifically, the signal feedback board 245 is arranged on the linear bearing 247; a part of the signal feedback board 245 extends beyond the linear bearing 247, that is, an orthogonal projection of a part of the signal feedback board 245 on the linear bearing 247 is not covered by the linear bearing 247; and a notch 2451 is formed in the part of the signal feedback board 245 extending beyond the linear bearing 247.

The linear bearing 247 sleeves on the second lead screw 244 and can move back and forth as the second lead screw 244, which extends in a straight line, rotates. The linear bearing 247 refers to a structural member that fixes the signal feedback board 245 and may drive the signal feedback board 245 to move back and forth along a straight line.

The second lead screw 244 is connected to the mobile motor 241 via the second motor coupling 242. One end of the second lead screw 244 penetrates through the base 249 and is connected to the second motor coupling 242; and the other end of the second lead screw 244 is fixed to the base 249. When the adhesive tape 701 enters the vicinity of the notch 2451 (i.e., the adhesive tape detection zone), the second lead screw 244 is driven to rotate by the mobile motor 241, which in turn drives the signal feedback board 245 to move forward and backward to confirm the detection position of the adhesive tape 701. The mobile motor 241 is connected to the control assembly, and the control assembly is further configured to control the mobile motor 241 to work.

The adhesive tape sensor 246 is arranged on the signal feedback board 245 and is arranged close to the notch 2451 in the signal feedback board 245, that is, close to the adhesive tape detection zone, so as to detect the offset situation of the adhesive tape 701. The adhesive tape sensor 246 refers to a structural member that converts a detected offset signal of the adhesive tape 701 into an electrical signal. The adhesive tape sensor 246 automatically detects the offset position of the adhesive tape 701 during operation. The adhesive tape sensor 246 is further connected to the control assembly. The control assembly is further configured to receive the offset situation detected by the adhesive tape sensor 246, and control the deviation-rectifying motor 2144 of the deviation-rectifying drive assembly 214 to drive the unwinding reel 2121 to move along its own axial direction according to the position offset situation of the adhesive tape 701 during the transport process, so as to rectify the deviation of the adhesive tape 701. A closed loop is formed between the adhesive tape sensor 246 and the deviation-rectifying motor 2144 to maintain the alignment of the adhesive tape 701 during unwinding.

The two second sensors 248 are spaced apart on the base 249. The second sensors 248 are configured to limit the movement range of the linear bearing 247. The linear bearing 247 moves between the two second sensors 248 to improve the accuracy of detecting the position offset situation of the adhesive tape 701 during the transport process and maintain the position consistency of the adhesive tape 701. The second sensors 248 are connected to the control assembly. Optionally, the second sensors 248 are photoelectric sensors, and the photoelectric sensor refers to a structural member that converts a light signal into an electrical signal.

The linear bearing 247 further sleeves on the optical axis positioning column 243, the optical axis positioning column 243 is parallel to the second lead screw 244, and the optical axis positioning column 243 guides the movement of the linear bearing 247. The two opposite ends of the optical axis positioning column 243 are respectively fixed to the base 249. Optionally, the second deviation-rectifying detection assembly 240 includes two optical axis positioning columns 243, and a line connecting the center points of orthographic projections of the two optical axis positioning columns 243 and the second lead screw 244 on the linear bearing 247 forms a triangular structure.

The base 249 is fixed to the support mechanism 100, thus fixing the entire second deviation-rectifying detection assembly 240 to the support mechanism 100.

Referring again to FIG. 1a, the adhesive application mechanism 200 further includes a tension control mechanism 250. The tension control mechanism 250 is arranged on the transport path of the adhesive tape 701. The tension control mechanism 250 is configured to adjust the tension of the adhesive tape 701 during the transport process, and prevent the adhesive tape 701 from curling and tangling during the adhesive application process, thereby achieving a good adhesive application effect.

The tension control mechanism 250 is located downstream of the unwinding mechanism 210. Optionally, the tension control mechanism 250 is located downstream of the second deviation-rectifying detection assembly 240.

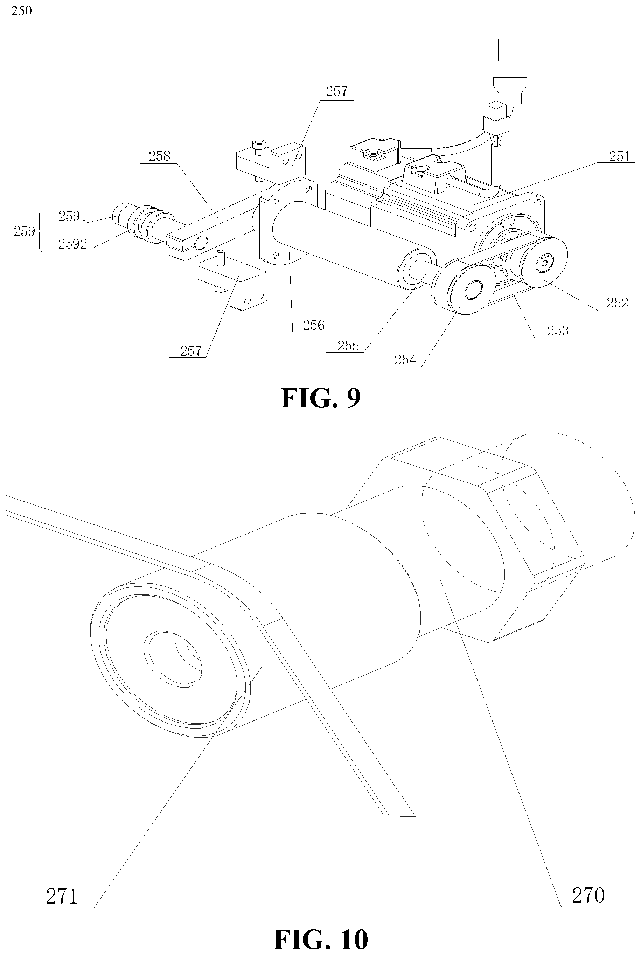

Please refer to FIG. 9 and FIG. 10, FIG. 9 is a schematic structural diagram of a tension control mechanism of the adhesive application mechanism shown in FIG. 1a, and FIG. 10 is a schematic structural diagram of a tension sensor of the adhesive application mechanism shown in FIG. 1a.

The tension control mechanism 250 includes a tension control motor 251, a tension drive wheel 252, a tension synchronous belt 253, a tension synchronous wheel 254, a tension coupling 255, a tension bearing seat 256, tension limiting blocks 257, a tension connecting block 258, and a tension positioning swing roller 259.

The tension drive wheel 252 is connected to a drive shaft of the tension control motor 251, and the tension drive wheel 252 rotates under the drive of the tension control motor 251. The tension synchronous wheel 254 rotates synchronously with the tension drive wheel 252 via the tension synchronous belt 253. The tension synchronous wheel 254 is fixed to an end of the tension coupling 255. The tension bearing seat 256 sleeves on the tension coupling 255. Two ends of the tension connecting block 258 are connected to the tension coupling 255 and the tension positioning swing roller 259 respectively, and the tension connecting block 258 is fixed on the tension bearing seat 256.

The tension control mechanism 250 includes two tension limiting blocks 257, and the two tension limiting blocks 257 are respectively arranged on upper and lower sides of the tension connecting block 258 to limit the swing amplitude of the tension connecting block 258. The tension connecting block 258 is connected to the tension positioning swing roller 259, thereby limiting the swing amplitude of the tension positioning swing roller 259. When the tension connecting block 258 contacts the tension limiting block 257 on the upper side of the tension connecting block 258, it is the maximum tension limiting position of the adhesive tape 701; and when the tension connecting block 258 contacts the tension limiting block 257 on the lower side of the tension connecting block 258, it is the minimum tension limiting position of the adhesive tape 701.

The tension sensor 270 is configured to detect the tension of the adhesive tape 701 and feed a detection result back to the control assembly. The tension sensor refers to a structural member that converts a light signal into an electrical signal. The tension sensor 270 and the tension control motor 251 are connected to the control assembly. The control assembly is configured to receive a detection result from the tension sensor 270, and control the tension control motor 251 to drive the tension drive wheel 252 to rotate according to the detection result fed back by the tension sensor 270. Then, the rotation is transmitted to the tension positioning swing roller 259 through the tension synchronous belt 253, the tension synchronous wheel 254, the tension coupling 255, and the tension connecting block 258 in sequence. The swing of the tension positioning swing roller 259 is used to make the tension of the adhesive tape 701 constant. Optionally, the tension sensor 270 is arranged adjacent to the tension positioning swing roller 259.

The tension sensor 270 includes a smooth tension detection portion 271. The adhesive tape 701 passes through the tension detection portion 271 to enable the tension sensor 270 to detect the tension of the adhesive tape 701. The tension detection portion 271 is of a cylindrical structure, which reduces the possibility of damaging the adhesive tape 701 in a process of detecting the tension of the adhesive tape 701 by the tension sensor 270.

In an implementation, the tension control motor 251 includes a servo motor.

In an implementation, the tension positioning swing roller 259 includes a second rubber roll 2591 and two second limiting sheets 2592. The two second limiting sheets 2592 sleeve on the second rubber roll 2591 at intervals. The two second limiting sheets 2592 cooperate with the second rubber roll 2591 to define and form an annular accommodating groove, and the adhesive tape 701 is placed in the annular accommodating groove. In one embodiment, the tension positioning swing roller 259 may also be a deviation-rectifying guide wheel assembly 215.

In an implementation, the tension coupling 255 extends in a straight line.

In an implementation, the tension connecting block 258 is of a cuboid structure.

Referring again to FIG. 1a, the adhesive application mechanism 200 further includes a traction mechanism 260, and the traction mechanism 260 is arranged on the transport path of the adhesive tape 701 and is configured to pull the adhesive tape 701. By arranging the traction mechanism 260, the transport speed of the adhesive tape 701 may be controlled.

The traction mechanism 260 is arranged downstream of the unwinding mechanism 210. Optionally, the traction mechanism 260 is arranged downstream of the tension control mechanism 250.

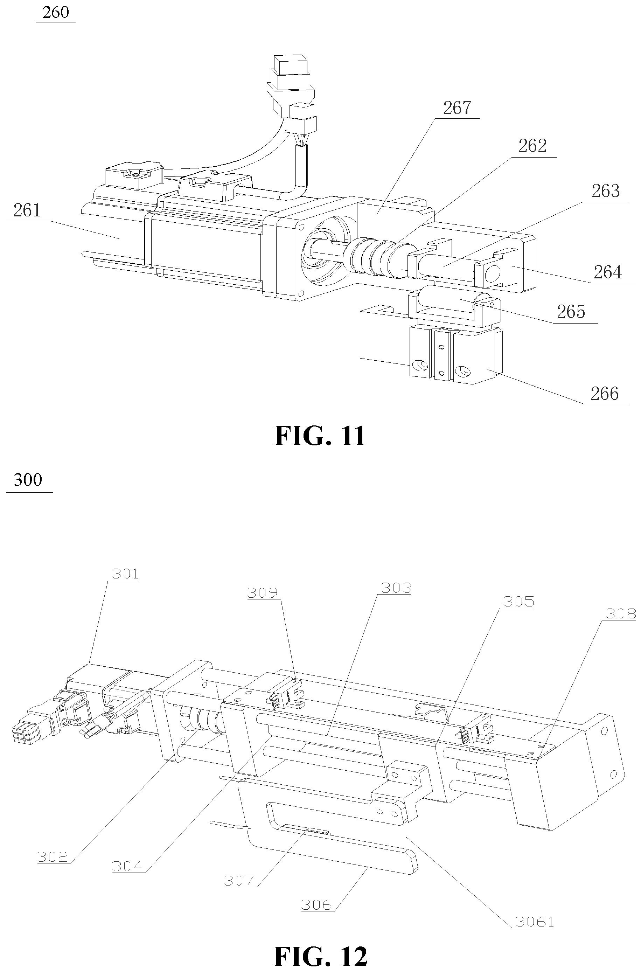

Please refer to FIG. 11, FIG. 11 is a schematic structural diagram of a traction mechanism of the adhesive application mechanism shown in FIG. 1a.

The traction mechanism 260 includes a traction motor 261, a traction coupling 262, a rotating roller 263, roller positioning blocks 264, a positioning roller 265, a roller cylinder 266, and a traction positioning plate 267.

The rotating roller 263 is connected to the traction motor 261 via the traction coupling 262. The traction positioning plate 267 is fixed to a housing of the traction motor 261. The two roller positioning blocks 264 are spaced apart on the traction positioning plate 267. The roller positioning blocks 264 are provided with mounting holes (not shown). One end of the rotating roller 263 penetrates through the mounting hole of one roller positioning block 264 and is connected to the traction coupling 262, and the other end of the rotating roller 263 is arranged in the mounting hole of another roller positioning block 264. The positioning roller 265 and the rotating roller 263 are correspondingly arranged, and the roller cylinder 266 is configured to drive the positioning roller 265 to move in a direction close to away or from the rotating roller 263. The roller cylinder 266 is connected to the control assembly, and the control assembly is further configured to control the roller cylinder 266 to drive the positioning roller 265 to move in a direction close to or away from the rotating roller 263. The traction motor 261 is connected to the control assembly, and the control assembly is further configured to control the traction motor 261 to work.

The roller cylinder 266 drives the positioning roller 265 to move in a direction close to the rotating roller 263, and the adhesive tape 701 is pre-pressed between the positioning roller 265 and the rotating roller 263. The traction motor 261 is transmitted to the rotating roller 263 and drives the rotating roller 263 to rotate, thereby controlling the overall conveying speed of the adhesive tape 701.

In an implementation, the traction motor 261 is electrically connected to the unwinding swing roller assembly 230. The unwinding swing roller assembly 230 is configured to detect the tension of the adhesive tape 701 released by the unwinding assembly 211 and provide feedback to the control assembly. The control assembly is configured to receive the tension fed back by the unwinding swing roller assembly 230 and adjust the driving force of the traction motor 261 according to the tension fed back by the unwinding swing roller assembly 230, thereby adjusting the transport speed of the adhesive tape 701. Specifically, the rotating speed of the rotating roller 263 is controlled by the traction motor 261, thereby controlling the transport speed of the adhesive tape 701.

It should be noted that the control assembly is configured to simultaneously control the unwinding motor 2111 and the traction motor 261 according to the tension signal of the adhesive tape 701 detected by the unwinding swing roller assembly 230, so that a speed at which the unwinding reel 2121 releases the adhesive tape 701 matches the transport speed of the adhesive tape 701 downstream of the unwinding mechanism 210, keeping the adhesive tape 701 in a good adhesive application state and achieving a good adhesive application effect.

Referring again to FIG. 1a, the adhesive application mechanism 200 further includes a plurality of deviation-rectifying guide wheel assemblies 215 and a plurality of positioning guide wheel assemblies 216. The deviation-rectifying guide wheel assemblies 215 and the positioning guide wheel assemblies 216 are both located downstream of the unwinding mechanism 210. Optionally, the plurality of deviation-rectifying guide wheel assemblies 215 and the plurality of positioning guide wheel assemblies 216 are located downstream of the second deviation-rectifying detection assembly 240 and upstream of the tension control mechanism 250.

The plurality of deviation-rectifying guide wheel assemblies 215 and the plurality of positioning guide wheel assemblies 216 are arranged sequentially along the transport path of the adhesive tape 701. That is, the adhesive tape 701 passes through the plurality of deviation-rectifying guide wheel assemblies 215 before passing through the plurality of positioning guide wheel assemblies 216. The deviation-rectifying guide wheel assemblies 215 and the positioning guide wheel assemblies 216 are cooperated to rectify the deviation in the transport of the adhesive tape 701. The deviation-rectifying guide wheel assemblies 215 and the positioning guide wheel assemblies 216 each refer to a structural member that guides the transport of the adhesive tape 701.

The specific structures of the plurality of deviation-rectifying guide wheel assemblies 215 and the plurality of positioning guide wheel assemblies 216, as well as the specific settings for how to rectify the deviation of the adhesive tape 701, may refer to the relevant introduction of the deviation-rectifying guide wheel assembly 215 and the positioning guide wheel assembly 216 in the unwinding mechanism 210, and will not be repeated here.

Referring again to FIG. 1a, the adhesive application device 1000 further includes a feeding bias detection mechanism 300 and an adhesive application deviation-rectifying mechanism 400. The feeding bias detection mechanism 300 is arranged at a feeding end A of the support mechanism 100. The feeding bias detection mechanism 300 is configured to detect the position offset situation of the electrode plate. The adhesive application deviation-rectifying mechanism 400 is connected to the support mechanism 100. The adhesive application deviation-rectifying mechanism 400 is configured to drive the support mechanism 100 to move in a direction perpendicular to the transport direction of the electrode plate according to the position offset situation of the electrode plate detected by the feeding bias detection mechanism 300. The feeding bias detection mechanism 300 and the adhesive application deviation-rectifying mechanism 400 are respectively connected to the control assembly. The control assembly is configured to receive the position offset situation of the electrode plate detected by the feeding bias detection mechanism 300, and control the adhesive application deviation-rectifying mechanism 400 to drive the support mechanism 100 to move in a direction perpendicular to the transport direction the electrode plate according to the position offset situation of the electrode plate fed back by the feeding bias detection mechanism 300, thereby driving the adhesive application mechanism 200 arranged on the support mechanism 100 to move, so as to maintain the alignment of the adhesive tape 701 released by the adhesive application mechanism 200 with the part of the electrode plate to be subjected to adhesive application, thus maintaining the adhesive application precision and having a good adhesive application effect.

Please refer to FIG. 12, FIG. 12 is a schematic structural diagram of a feeding bias detection mechanism of the adhesive application device shown in FIG. 1a.

The feeding bias detection mechanism 300 refers to a structural member that detects the position offset situation of the electrode plate when it enters the adhesive application mechanism 200 for adhesive application. The feeding bias detection mechanism 300 includes an electrode plate feeding deviation-rectifying motor 301, a third motor coupling 302, an electrode plate positioning guide shaft 303, a third lead screw 304, an electrode plate bearing seat 305, an electrode plate detection plate 306, an electrode plate detection sensor 307, an electrode plate detection seat 308, and third sensors 309.

The electrode plate detection plate 306 refers to a structural member that forms an electrode plate detection zone. The electrode plate detection plate 306 is provided with an opening 3061, and the opening 3061 forms the detection zone of the electrode plate. The electrode plate passes through the opening 3061. Specifically, the electrode plate detection plate 306 is connected to the electrode plate bearing seat 305; a part of the electrode plate detection plate 306 extends beyond the electrode plate bearing seat 305, that is, an orthogonal projection of the part of the electrode plate detection plate 306 on the electrode plate bearing seat 305 is not covered by the electrode plate bearing seat 305; and the opening 3061 is formed in the part of the electrode plate detection plate 306 extending beyond the electrode plate bearing seat 305.

The electrode plate bearing seat 305 sleeves on the third lead screw 304 and can move back and forth as the third lead screw 304, which extends in third straight line, rotates. The electrode plate bearing seat 305 refers to a structural member that fixes the electrode plate detection plate 306 and may drive the electrode plate detection plate 306 to move back and forth along a straight line.

The third lead screw 304 is connected to the electrode plate feeding deviation-rectifying motor 301 via the third motor coupling 302. When the electrode plate enters the vicinity of the opening 3061 (i.e., the electrode plate detection zone), the third lead screw 304 is driven to rotate by the electrode plate feeding deviation-rectifying motor 301, which in turn drives the electrode plate detection plate 306 to move forward and backward in a straight line to confirm the detection position of the electrode plate. The detection position of the electrode plate is the position of the electrode plate to be subjected to adhesive application. Exemplarily, adhesive application is performed on an edge of the electrode plate, and the electrode plate detection plate 306 detects the edge position of the electrode plate.

The electrode plate bearing seat 305 further sleeves on the electrode plate positioning guide shaft 303, the electrode plate positioning guide shaft 303 is parallel to the third lead screw 304, and the electrode plate positioning guide shaft 303 guides the movement of the electrode plate bearing seat 305. The two opposite ends of the electrode plate positioning guide shaft 303 are respectively fixed to the electrode plate detection seat 308. Optionally, the feeding bias detection mechanism 300 includes two positioning guide shafts 303, and a line connecting the center points of orthographic projections of the two positioning guide shafts 303 and the third second lead screw 304 on the electrode plate bearing seat 305 forms a triangular structure.

The two opposite ends of the electrode plate positioning guide shafts 303 are respectively fixed to the electrode plate detection seat 308. One end of the third lead screw 304 penetrates through the electrode plate detection seat 308 and is connected to the third motor coupling 302; and the other end of the third lead screw 304 is connected to the electrode plate detection seat 308. The electrode plate detection seat 308 is connected to the support mechanism 100, thereby enabling the entire feeding bias detection mechanism 300 to be arranged at the feeding end A of the support mechanism 100.

The electrode plate detection sensor 307 is arranged on the electrode plate detection plate 306, and is arranged adjacent to the opening 3061 in the electrode plate detection plate 306, that is, adjacent to the electrode plate detection zone, so as to detect the offset situation of the electrode plate. The electrode plate detection sensor 307 refers to a structural member that converts a detected electrode plate offset signal into an electrical signal. Optionally, one electrode plate detection sensor 307 is arranged on each of the two opposite sides of the opening 3061.

The electrode plate detection sensors 307 automatically detect the offset position of the electrode plate during operation. The electrode plate detection sensor 307 is further connected to the control assembly, and the electrode plate detection sensor 307 transmits the detected electrode plate offset situation to the control assembly. The control assembly is configured to receive the electrode plate offset situation detected by the electrode plate detection sensor 307, and control the adhesive application deviation-rectifying mechanism 400 to drive the support mechanism 100 to move according to the position offset situation of the electrode plate during the transport process fed back by the electrode plate detection sensor 307, so as to rectify the deviation of the position of the electrode plate and achieve matching of the part of the electrode plate to be subjected to adhesive application with the adhesive application position of the adhesive application mechanism 200. A closed loop is formed between the electrode plate detection sensor 307 and the adhesive application deviation-rectifying mechanism 400 to maintain matching of the electrode plate with the adhesive application position of the adhesive application mechanism 200, thereby increasing the adhesive application yield.

The two third sensors 309 are spaced apart on the electrode plate bearing seat 305. The third sensors 309 are configured to limit the movement range of the electrode plate bearing seat 305. The electrode plate bearing seat 305 moves between the two third sensors 309, which improves the accuracy of detecting the position offset situation of the electrode plate during the transport process and promotes matching of the electrode plate with the adhesive application position of the adhesive application mechanism 200. The third sensors 309 are connected to the control assembly. Optionally, the third sensors 309 are photoelectric sensors, and the photoelectric sensor refers to a structural member that converts a light signal into an electrical signal.

In an implementation, the electrode plate feeding deviation-rectifying motor 301 includes a servo motor.

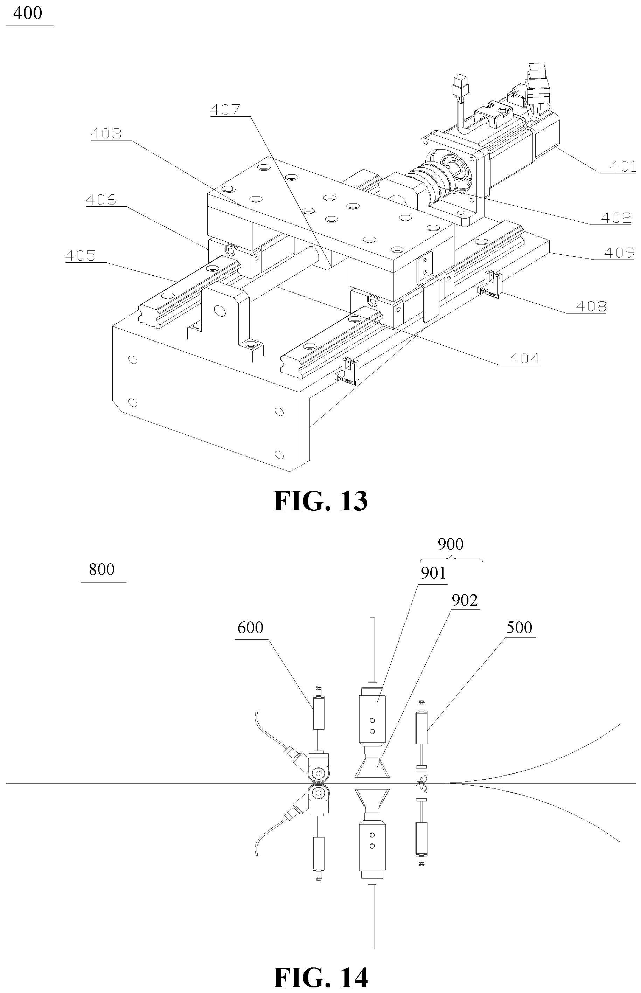

Please refer to FIG. 13, FIG. 13 is a schematic structural diagram of an adhesive application deviation-rectifying mechanism of the adhesive application device shown in FIG. 1a.

The adhesive application deviation-rectifying mechanism 400 refers to a structural member that drives the support mechanism 100 to move in a direction perpendicular to the transport direction of the electrode plate according to the position offset situation of the electrode plate detected by the feeding bias detection mechanism 300. The adhesive application deviation-rectifying mechanism 400 includes a transplanting motor 401, a fourth coupling 402, a transplanting fixing plate 403, a fourth lead screw 404, linear tracks 405, linear sliding members 406, a transplanting connecting block 407, fourth sensors 408, and a transplanting base 409.

The two linear tracks 405 are spaced apart on the transplanting base 409. The linear sliding members 406 are arranged on the linear tracks 405 and slide along the linear tracks 405. One linear track is correspondingly provided with one linear sliding member 406. The two opposite ends of the transplanting fixing plate 403 are each connected to one linear sliding member 406. The transplanting fixing plate 403 is fixed to one side of the linear sliding members 406 away from the transplanting base 409. The transplanting fixing plate 403 and the transplanting base 409 are spaced apart. The transplanting connecting block 407 is connected to the transplanting fixing plate 403, and the transplanting connecting block 407 is arranged on one side of the transplanting fixing plate 403 close to the transplanting base 409. The fourth lead screw 404 penetrates through the transplanting connecting block 407, that is, the transplanting connecting block 407 sleeves on the fourth lead screw 404. The fourth lead screw 404 is connected to the transplanting motor 401 via the fourth coupling 402. The two fourth sensors 408 are arranged on the transplanting base 409, and the linear sliding members 406 slide between the two fourth sensors 408, so that the maximum range of movement of the linear sliding members 406 is limited.

In an implementation, the transplanting motor 401 includes a servo motor.

The transplanting motor 401 is electrically connected to the control assembly. The control assembly is configured to control the driving force of the transplanting motor 401 according to the position offset situation of the electrode plate during the transport process fed back by the electrode plate detection sensor 307, so as to drive the fourth lead screw 404 to rotate. The rotation is transmitted to the transplanting fixing plate 403 through the transplanting connecting block 407 sleeved on the fourth lead screw 404, causing the transplanting fixing plate 403 to move back and forth. The transplanting fixing plate 403 is connected to the support mechanism 100. The support mechanism 100 moves with the movement of the transplanting fixing plate 403, so that the entire mechanism automatically rectifies the deviation, and achieves matching of the part of the electrode plate to be subjected to adhesive application with the adhesive application position of the adhesive application mechanism 200.

The fourth sensors 408 are configured to limit the movement range of the linear sliding members 406, and the linear sliding members 406 slide between the two fourth sensors 408, thereby improving the accuracy of the movement of the linear sliding members 406 and promoting the matching of the electrode plate with the adhesive application position of the adhesive application mechanism 200. The fourth sensors 408 are connected to the control assembly. Optionally, the fourth sensors 408 are photoelectric sensors, and the photoelectric sensor refers to a structural member that converts a light signal into an electrical signal.

Referring again to FIG. 1a, the adhesive application device 1000 further includes a pressing roller mechanism 800. The pressing roller mechanism 800 is arranged at a discharging end B of the support mechanism 100. The pressing roller mechanism 800 is configured to smooth and compact the electrode plate to which the adhesive tape 701 has been applied, so as to improve the bonding tightness between the adhesive tape 701 and the electrode plate.

Please refer to FIG. 14, FIG. 14 is a schematic structural diagram of the pressing roller mechanism shown in FIG. 1a.

The pressing roller mechanism 800 includes a cold-pressing roller mechanism 500, a hot-pressing roller mechanism 600, and a preheating assembly 900. The cold-pressing roller mechanism 500, the hot-pressing roller mechanism 600, and the preheating assembly 900 are respectively connected to the control assembly, and the control assembly is configured to control the cold-pressing roller mechanism 500, the hot-pressing roller mechanism 600, and the preheating assembly 900 to work.

The cold-pressing roller mechanism 500 is arranged at a discharging end B of the support mechanism 100. The cold-pressing roller mechanism 500 is configured to perform preliminary extrusion on an electrode plate to which an adhesive tape 701 has been applied. By arranging the cold-pressing roller mechanism 500 to perform preliminary extrusion on the electrode plate to which the adhesive tape 701 has been applied, and to smooth and compact the adhesive tape 701 on the surface of the electrode plate, the bonding tightness between the adhesive tape 701 and the electrode plate is improved.

The hot-pressing roller mechanism 600 is arranged at the discharging end B of the support mechanism 100, and the hot-pressing roller mechanism 600 is located downstream of the cold-pressing roller mechanism 500. The hot-pressing roller mechanism 600 is configured to perform hot pressing on the electrode plate subjected to preliminary extrusion, and to further smooth and compact the adhesive tape 701 on the surface of the electrode plate, thus enhancing the bonding tightness between the adhesive tape 701 and the electrode plate.

Along the transport path of the electrode plate, the preheating assembly 900 is located between the cold-pressing roller mechanism 500 and the hot-pressing roller mechanism 600. The preheating assembly 900 is configured to preheat the adhesive tape 701 on the preliminarily extruded electrode plate, so as to soften the adhesive tape 701, and improve the flexibility of adhesive application.

It should be noted that in other embodiments, the pressing roller mechanism 800 may also include a cold-pressing roller mechanism 500 and a hot-pressing roller mechanism 600, which may be designed according to specific needs, as long as it can achieve tight bonding between the adhesive tape 701 and the electrode plate. In other words, the preheating assembly 900 is an optional structure.

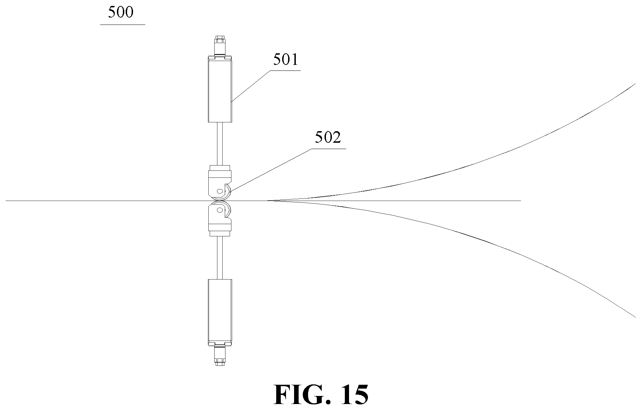

Please refer to FIG. 15, FIG. 15 is a schematic structural diagram of a cold-pressing roller mechanism of the adhesive application device shown in FIG. 14.

The cold-pressing roller mechanism 500 includes a cold-pressing drive member 501 and a cold-pressing roller 502. The cold-pressing drive member 501 is connected to the cold-pressing roller 502. The cold-pressing drive member 501 is configured to drive the cold-pressing roller 502 to move in a direction close to or away from the electrode plate. By controlling the cold-pressing drive member 501, an extrusion force of the cold-pressing roller 502 on the electrode plate is achieved. Specifically, the cold-pressing drive member 501 is connected to the control assembly, and the control assembly is configured to control the cold-pressing drive member 501 to drive the cold-pressing roller 502 to move in a direction close to or away from the electrode plate. In other words, the control assembly is configured to control a distance between the cold-pressing roller 502 of the cold-pressing roller mechanism 500 and the electrode plate. The distance between the cold-pressing roller 502 and the electrode plate is automatically adjusted by the cold-pressing drive member 501 and the control assembly.

In an implementation, the cold-pressing drive member 501 may be an air cylinder.

In an implementation, the cold-pressing roller mechanism 500 includes two cold-pressing rollers 502, the two cold-pressing rollers 502 are respectively arranged on two opposite sides of the transport path of the electrode plate. There is one cold-pressing roller 502 of the cold-pressing roller mechanism 500 on each of the two opposite sides of the electrode plate to perform preliminary extrusion on the adhesive tape 701 on the surface of the electrode plate, so that the adhesive tape 701 attached to the surface of the electrode plate is more closely adhered to the electrode plate. When the adhesive tape 701 is attached to one surface of the electrode plate, the two cold-pressing rollers 502 extrude the two opposite surfaces of the electrode plate to achieve the tight bonding between the adhesive tape 701 and the electrode plate. This eliminates the need for a support plate on the surface of the electrode plate where the adhesive tape is not attached (if there is only one cold-pressing roller 502, a support plate is arranged on the other side of the electrode plate, and the support plate supports the electrode plate, and then the cold-pressing roller 502 can extrude the electrode plate). When the adhesive tape 701 is attached to the two opposite surfaces of the electrode plate respectively, the two cold-pressing rollers 502 extrude the two opposite surfaces of the electrode plate to achieve the tight bonding between the adhesive tape 701 attached to the two surfaces of the electrode plate and the electrode plate. By controlling the two cold-pressing drive members 501 through the control assembly, the spacing between the two cold-pressing rollers 502 is adjusted, thereby adjusting the extrusion force on the surface of the electrode plate. Optionally, the two cold-pressing rollers 502 are arranged axially symmetrical to each other.

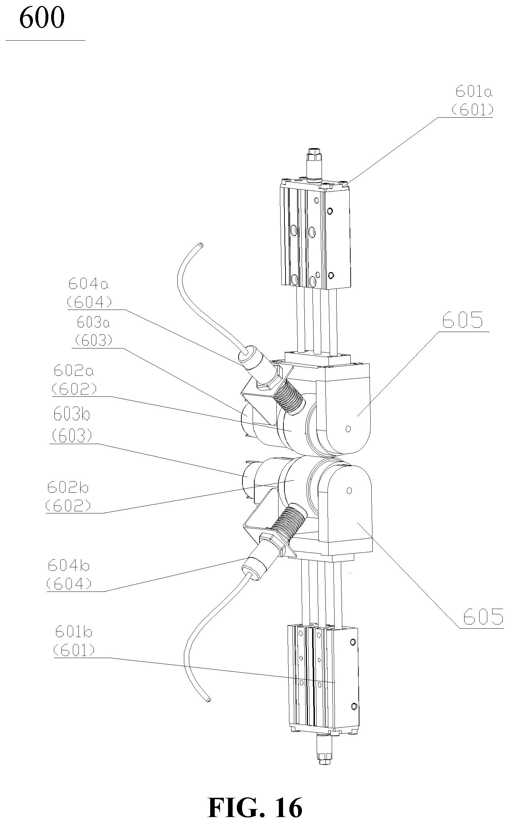

Please refer to FIG. 16, FIG. 16 is a schematic structural diagram of a hot-pressing roller mechanism of the adhesive application device shown in FIG. 14.

The hot-pressing roller mechanism 600 includes a hot-pressing roller 602 and heating assembly 603. The heating assembly 603 and the hot-pressing roller 602 are spaced apart from each other; and the heating assembly 603 is configured to perform non-contact heating on hot-press roller 602. For contact heating, the heating assembly needs to rotate together with the hot-pressing roller, and an annular electrode needs to be introduced to maintain power supply to the heating assembly. The embodiment of the present application employs non-contact heating, which eliminates the annular electrode and reduces the complexity of the equipment structure. In addition, by means of non-contact heating, no structural member is introduced to the surface of the hot-pressing roller 602, such that the phenomenon of foreign matter being introduced to the surface of an electrode plate during the process of the hot-pressing roller 602 performing hot pressing on the electrode plate can be alleviated, thus increasing the adhesive application yield. The hot-pressing roller mechanism 600 is used to perform hot pressing on the electrode plate to which the adhesive has been applied, and to smooth and compact the adhesive tape 701 on the surface of the electrode plate, thus enhancing the bonding tightness between the adhesive tape 701 and the electrode plate, and increasing the adhesive application yield.

In an implementation, a heating temperature of the heating assembly 603 is adjustable within the range of 20 °C to 180 °C, and the heating temperature is selected as needed to increase the adhesive application yield.

In an implementation, the hot-pressing roller mechanism 600 further includes a hot-pressing base 605. The hot-pressing roller 602 and the heating assembly 603 are respectively connected to the hot-pressing base 605. The hot-pressing base 605 is provided with a through hole (not shown) corresponding to the hot-pressing roller 602. The hot-pressing roller 602 and the heating assembly 603 are respectively arranged at two opposite ends of the through hole. The heating assembly 603 is a heat radiation assembly or a hot air blowing assembly. Heat from the heating assembly 603 is conducted to the hot-pressing roller 602 through the through hole, achieving non-contact heating. The heating assembly 603 heats a middle part of the hot-pressing roller 602 through the through hole, and the heat from the middle part of the hot-pressing roller 602 is transferred to the surface of the hot-pressing roller 602 to achieve hot pressing. Optionally, one heating assembly 603 is arranged at each of the two opposite ends of the hot-pressing roller 602 to achieve efficient heating of the hot-pressing roller 602 and maintain the temperature consistency of each part of the hot-pressing roller 602.

The heat radiation assembly refers to a heat transfer structural member that dissipate heat energy outward in a form of electromagnetic radiation. The hot air blowing assembly refers to a heat transfer structural member that can generate hot air and dissipate the hot air outward. The functions of the following heat radiation assembly and hot air blowing assembly are the same, and will not be repeated.

In an implementation, the hot-pressing roller mechanism 600 further includes a hot-pressing base 605. The hot-pressing roller 602 and the heating assembly 603 are respectively connected to the hot-pressing base 605, an orthographic projection of the hot-pressing roller 602 on the hot-pressing base 605 at least partially overlaps with an orthographic projection of the heating assembly 603 on the hot-pressing base 605; the hot-pressing base 605 is of a transparent material; and the heating assembly 603 is a heat radiation assembly. Heat from the heating assembly 603 passes through the hot-pressing base 605 of the transparent material to be transferred to the hot-pressing roller 602, achieving non-contact heating. By making that the orthographic projection of the hot-pressing roller 602 on the hot-pressing base 605 at least partially overlaps with the orthographic projection of the heating assembly 603 on the hot-pressing base 605, a heat conduction path is shortened, and a heat utilization rate is increased. Optionally, one heating assembly 603 is arranged at each of the two opposite ends of the hot-pressing roller 602 to achieve efficient heating of the hot-pressing roller 602 and maintain the temperature consistency of each part of the hot-pressing roller 602.

In an implementation, when the heating assembly 603 is the hot air blowing assembly, an air outlet direction of the hot air blowing assembly is perpendicular to an axial direction of the hot air blowing assembly roller 602, thereby achieving non-contact heating. furthermore, an angle between the air outlet direction of the hot air blowing assembly and an electrode plate transport direction is 30-60 degrees. The angle between the air outlet direction of the heating assembly 603 and the electrode plate transport direction is 30-60 degrees, which reduces the interference on extrusion of the hot-pressing roller 602 on the electrode plate, meanwhile achieves efficient heating of the hot-pressing roller 602, and achieves a good hot-pressing effect. Optionally, in the axial direction of the hot-pressing roller 602, a width of an air outlet of the heating assembly 603 is greater than or equal a length of the hot-pressing roller 602, so that each part of the hot-pressing roller 602 is heated uniformly, and a temperature consistency of each part of the hot-pressing roller 602 is maintained.

In an implementation, the hot-pressing roller mechanism 600 further includes a temperature sensor 604, and the temperature sensor 604 is configured to detect a temperature of the hot-pressing roller 602. The temperature sensor 604 detects the temperature of the hot-pressing roller 602 in real time and feeds the detected temperature back to the control assembly. The control assembly is configured to control a heating parameter of the heating assembly 603 according to the temperature of the hot-pressing roller 602 fed back by the temperature sensor 604, so as to maintain the temperature of the hot-pressing roller 602 at a predetermined temperature. In other words, the control assembly is configured to control the temperature of the hot-pressing roller 602.

In an implementation, the hot-pressing roller mechanism 600 further includes a hot-pressing drive member 601 connected to the hot-pressing roller 602, and the hot-pressing drive member 601 is configured to drive the hot-pressing roller 602 to move in a direction close to or away from the electrode plate. Specifically, the hot-pressing drive member 601 is connected to the control assembly, and the control assembly is configured to control the hot-pressing drive member 601 to drive the hot-pressing roller 602 to move in a direction close to or away from the electrode plate. In other words, the control assembly is configured to control the distance between the hot-pressing roller 602 of the hot-pressing roller mechanism 600 and the electrode plate. The distance between the hot-pressing roller and the electrode plate is automatically adjusted through the control assembly and the hot-pressing drive member 601. Optionally, the hot-pressing drive member 601 may be an air cylinder.

In an implementation, the hot-pressing roller mechanism 600 includes two hot-pressing rollers 602, the two hot-pressing rollers 602 are respectively arranged on two opposite sides of the transport path of the electrode plate, and there is one hot-pressing roller 602 on each of the two opposite sides of the electrode plate to perform hot pressing on the adhesive tape 701 on the surface of the electrode plate, so that the adhesive tape 701 attached to the surface of the electrode plate is more closely adhered to the electrode plate.

Each hot-pressing roller 602 is correspondingly provided with the heating assembly 603, the hot-pressing drive member 601, and the temperature sensor 604. When the adhesive tape 701 is attached to one surface of the electrode plate, the two hot-pressing rollers 602 extrude the two opposite surfaces of the electrode plate to achieve the tight bonding between the adhesive tape 701 and the electrode plate. This eliminates the need for a support plate on the surface of the electrode plate where the adhesive tape is not attached (if there is only one hot-pressing roller 602, a support plate is arranged on the other side of the electrode plate, the support plate supports the electrode plate, and then the hot-pressing roller 602 can extrude the electrode plate). When the adhesive tape 701 is attached to the two opposite surfaces of the electrode plate respectively, the two hot-pressing rollers 602 extrude the two opposite surfaces of the electrode plate to achieve the tight bonding between the adhesive tape 701 attached to the two surfaces of the electrode plate and the electrode plate. By controlling the two hot-pressing drive members 601 through the control assembly, the spacing between the two hot-pressing rollers 602 is adjusted, thereby adjusting the extrusion force on the surface of the electrode plate. Optionally, the two hot-pressing rollers 602 are arranged axially symmetrical to each other, so as to extrude each part of the electrode plate from both sides, maintaining that the adhesive tape on each part of the electrode plate is tightly bonded to the electrode plate.

When the electrode plate is preliminarily extruded by the cold-pressing roller mechanism 500, the hot-pressing roller 602 is simultaneously heated to the set temperature. After the electrode plate is preliminarily extruded by the cold-pressing roller mechanism 500, the electrode plate enters an extrusion range of the hot-pressing roller mechanism 600. The hot-pressing drive member 601 drives the hot-pressing roller 602 to move close to the electrode plate and extrude the electrode plate again.

Referring again to FIG. 14, the preheating assembly 900 includes a hot air blowing assembly, and the hot air blowing assembly includes a hot air blowing gun 901 and a hot air blowing gun cover 902. The hot air blowing gun cover 902 is arranged at an end of the hot air blowing gun 901 close to the electrode plate. The hot air blowing gun cover 902 gathers the hot air blown out by the hot air blowing gun 901, so that the hot air acts on the electrode plate as much as possible, and the heat utilization rate is increased. Optionally, the hot air blowing gun cover 902 is trumpet-shaped. Optionally, an angle between an air outlet direction of the hot air blowing gun cover 902 and the electrode plate transport direction is 80-100 degrees, which increases the heat utilization rate of the hot air blown out by the hot air blowing gun 901 and has a good preheating effect on the adhesive tape on the electrode plate. Exemplarily, the angle between the air outlet direction of the hot air blowing gun cover 902 and the electrode plate transport direction is 90 degrees. The preheating assembly has a simple structure and low cost, and can achieve a good preheating effect. The preheating assembly 900 is connected to the control assembly. The control assembly is configured to control a heating parameter of the preheating assembly 900, and the heating parameter includes a temperature and an air volume.

In a specific implementation, the pressing roller mechanism 800 includes two hot-pressing rollers 602, two cold-pressing rollers 502, and two preheating assemblies 900. The two hot-pressing rollers 602, the two cold-pressing rollers 502, and the two preheating assemblies 900 are respectively arranged on both sides of the electrode plate. There is one cold-pressing roller 502 on each of the two opposite sides of the electrode plate to perform preliminary extrusion on the adhesive tape 701 on the surface of the electrode plate, there is one preheating assembly 900 on each of the two opposite sides of the electrode plate to perform preheating on the adhesive tape 701 on the surface of the electrode plate, and there is one hot-pressing roller 602 on each of the two opposite sides of the electrode plate to perform extrusion again on the adhesive tape 701 on the surface of the electrode plate, so that the adhesive tapes 701 attached to the two opposite surfaces of the electrode plate are more closely adhered to the electrode plate, and a good adhesive application effect is achieved. Optionally, the two hot-pressing rollers 602 are arranged axially symmetrical to each other; and/or, the two cold-pressing rollers 502 are arranged axially symmetrical to each other; and/or, the two preheating assemblies 900 are arranged axially symmetrical to each other, so as to extrude each part of the electrode plate from both sides, maintaining that the adhesive tape on each part of the electrode plate is tightly bonded to the electrode plate. The control assembly is configured to control a distance between the hot-pressing roller 602 of the hot-pressing roller mechanism 600 and the electrode plate, control a temperature of the hot-pressing roller 602, control a distance between the cold-pressing roller 502 of the cold-pressing roller mechanism 500 and the electrode plate, and control a heating temperature of the preheating assembly 900. The control assembly automatically smooths and compacts the electrode plate to which the adhesive has been applied, thereby enhancing the bonding tightness between the adhesive tape and the electrode plate and increasing an adhesive application yield. It should be noted that whether one adhesive application mechanism 200 is used to perform adhesive application on one surface of the electrode plate, or two adhesive application mechanisms 200 are used to perform adhesive application on two opposite surfaces of the electrode plate, the use of the two cold-pressing rollers 502, the two preheating assemblies 900, and the two hot-pressing rollers 602 to extrude both sides of the electrode plate helps to achieve the good adhesive application effect.

The two hot-pressing rollers 602 included by the pressing roller mechanism 800 are defined as a first hot-pressing roller 602a and a second hot-pressing roller 602b, respectively. The two heating assemblies 603 included by the pressing roller mechanism 800 are defined as a first heating assembly 603a and a second heating assembly 603b, respectively. The two temperature sensors 604 included by the pressing roller mechanism 800 are defined as a first temperature sensor 604a and a second temperature sensor 604b, respectively. The two hot-pressing drive members 601 included by the pressing roller mechanism 800 are defined as a first hot-pressing drive member 601a and a second hot-pressing drive member 601b, respectively.

The first hot-pressing roller 602a and the second hot-pressing roller 602b are spaced apart from each other, and the first hot-pressing roller 602a and the second hot-pressing roller 602b are respectively arranged on two opposite sides of the electrode plate transport path. The first heating assembly 603a is spaced apart from the first hot-pressing roller 602a and is configured to perform non-contact heating on the first hot-pressing roller 602a. The second heating assembly 603b is spaced apart from the second hot-pressing roller 602b and is configured to perform non-contact heating on the second hot-pressing roller 602b. The first heating assembly 603a and the second heating assembly 603b are respectively arranged on two opposite sides of the electrode plate transport path.

The first heating assembly 603a and the second heating assembly 603b are heat radiation assemblies or hot air blowing assemblies. Optionally, the first heating assembly 603a and the second heating assembly 603b are arranged axially symmetrical to each other.

The first temperature sensor 604a is configured to detect a temperature of the first hot-pressing roller 602a. The second temperature sensor 604b is configured to detect a temperature of the second hot-pressing roller 602b. The first hot-pressing drive member 601a is connected to the first hot-pressing roller 602a; the second hot-pressing drive member 601b is connected to the second hot-pressing roller 602b; and the first hot-pressing drive member 601a and the second hot-pressing drive member 601b are configured to adjust the spacing between the first hot-pressing roller 602a and the second hot-pressing roller 602b. By controlling the two hot-pressing drive members 601, the spacing between the two hot-pressing rollers 602 is adjusted, thereby adjusting the extrusion force on the surface of the electrode plate.

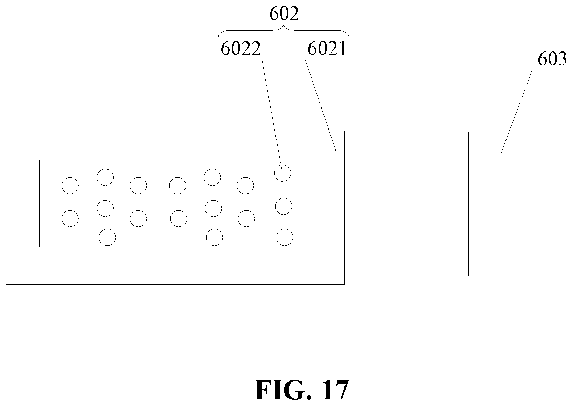

Please refer to FIG. 17, FIG. 17 is a schematic diagram of a simple structure of a hot-pressing roller and a heating assembly of the hot-pressing roller mechanism shown in FIG. 16.

The hot-pressing roller 602 is of a cylindrical structure, and the heating assembly 603 is arranged at one end of the hot-pressing roller 602 and is spaced apart from the end surface of the hot-pressing roller 602.

In an implementation, the hot-pressing roller 602 includes a housing 6021 and a medium 6022 arranged in the housing 6021. The housing 6021 has heat absorption and insulation properties, and is, for example, metal and a polymer. The medium 6022 has heat absorption and insulation properties.

The medium 6022 may be liquid, such as water or oil. By arranging a liquid medium 6022 inside the housing 6021, a cooling rate of the hot-pressing roller 602 is slowed down, which helps to increase the energy utilization rate of the heating assembly 603 and maintain the constant temperature of the hot-pressing roller 602. At this point, the heating assembly 603 may be a hot air blowing assembly or a heat radiation assembly.

When the heating assembly 603 is the heat radiation assembly, the medium 6022 may be a material that can absorb heat released by electromagnetic waves, such as carbon black or graphite. By designing the material of the medium 6022 as described above, the medium 6022 can heat up and cool down rapidly with the heating assembly 603, which is conducive to accurate control of the temperature of the hot-pressing roller 602.

In an implementation, the housing 6021 forms an accommodating cavity (not shown), and the medium 6022 is accommodated in the accommodating cavity, which is a sealed space. At this point, the medium 6022 may be liquid or solid.

In an implementation, the housing 6021 forms an accommodating cavity (not shown), and the medium 6022 is accommodated in the accommodating cavity. The accommodating cavity has an opening (not shown), and part of the heat from the heating assembly 603 heats the medium 6022 through the opening. At this point, the medium 6022 is solid. The heating assembly 603 may be a hot air blowing assembly or a heat radiation assembly.

In an implementation, the housing 6021 forms an accommodating cavity (not shown), and the medium 6022 is accommodated in the accommodating cavity. An inner surface of a part of a cavity wall of the accommodating cavity opposite to the heating assembly 603 and furthest from the heating assembly 603 is defined as a first surface. The first surface is a rough surface to have a diffuse reflection property. The heating assembly 603 is a heat radiation assembly. The heat of the heating assembly 603 is radiated to the first surface, and the first surface performs diffuse reflection, so that the part of heat heats the medium 6022 in the accommodating cavity, which can increase the energy utilization rate of the heating assembly 603 and improve the temperature uniformity of the medium 6022 in various places, thereby improving the temperature uniformity of each part of the hot-pressing roller 602. Exemplarily, the accommodating cavity has a cylindrical outline, and an end surface of the cylinder away from the heating assembly 603 is the first surface.

The adhesive application device 1000 provided by the embodiment of the present application is used to perform adhesive application on the die-cut electrode plate. The applied adhesive film provides a safe insulation against burrs generated after die-cutting the electrode plate, and improves the automation of adhesive application, thereby increasing adhesive application capacity and efficiency. The adhesive application device 1000 provided by the embodiment of the present application is adapted to an electrode plate die-cutting machine to achieve adhesive application to the die-cut electrode plate.

The adhesive application device 1000 provided by the embodiment of the present application is used to perform adhesive application on the electrode plate. With the cooperation of the first deviation-rectifying detection assembly 213, the second deviation-rectifying detection assembly 240, the deviation-rectifying drive assembly 214, the deviation-rectifying guide wheel assembly 215, the positioning guide wheel assembly 216, the feeding bias detection mechanism 300, and the adhesive application deviation-rectifying mechanism 400, the upper film width precision and double-sided adhesive application misalignment precision of adhesive application are high. An upper film width refers to a dimension of a part of the adhesive tape 701 that overlaps with the active material zone of the electrode plate in a direction perpendicular to a length of the adhesive tape 701.

An embodiment of the present application further provides a battery production system. The battery production system includes an electrode plate preparation device and the adhesive application device 1000 introduced in the above embodiments, and has at least the same advantages as the adhesive application device 1000. The specific settings of the electrode plate preparation device may refer to that in the prior art.

The descriptions above are only implementations of the present application and are not intended to limit the patent scope of the present application. Any variations with equivalent structure and equivalent flow made using the specification and accompanying drawings of the present application, which are directly or indirectly applied in other relevant technical fields, shall equally fall within the patent protection scope of the present application.

## Claims

1. A hot-pressing roller mechanism, comprising:
a hot-pressing roller; and
a heating assembly, wherein the heating assembly and the hot-pressing roller are spaced apart from each other; and the heating assembly is configured to perform non-contact heating on the hot-press roller.

2. The hot-pressing roller mechanism according to claim 1, further comprising a hot-pressing base, wherein the hot-pressing roller and the heating assembly are respectively connected to the hot-pressing base, the hot-pressing base is provided with a through hole corresponding to the hot-pressing roller, and the hot-pressing roller and the heating assembly are respectively arranged at two opposite ends of the through hole; and
the heating assembly is a heat radiation assembly or a hot air blowing assembly.

3. The hot-pressing roller mechanism according to claim 1, further comprising a hot-pressing base, wherein the hot-pressing roller and the heating assembly are respectively connected to the hot-pressing base, an orthographic projection of the hot-pressing roller on the hot-pressing base at least partially overlaps with an orthographic projection of the heating assembly on the hot-pressing base; and the hot-pressing base is of a transparent material; and
the heating assembly is a heat radiation assembly.

4. The hot-pressing roller mechanism according to claim 1, wherein the heating assembly is a hot air blowing assembly, an air outlet direction of the hot air blowing assembly is perpendicular to an axial direction of the hot-pressing roller, and an angle between the air outlet direction of the hot air blowing assembly and an electrode plate transport direction is 30-60 degrees.

5. The hot-pressing roller mechanism according to claim 4, wherein in the axial direction of the hot-pressing roller, a width of an air outlet of the heating assembly is greater than or equal to a length of the hot-pressing roller.

6. The hot-pressing roller mechanism according to claim 1, further comprising a temperature sensor configured to detect a temperature of the hot-pressing roller.

7. The hot-pressing roller mechanism according to claim 1 or 6, further comprising a hot-pressing drive member connected to the hot-pressing roller; wherein the hot-pressing drive member is configured to drive the hot-pressing roller to move in a direction close to or away from an electrode plate.

8. The hot-pressing roller mechanism according to claim 7, comprising two hot-pressing rollers; wherein the two hot-pressing rollers are respectively arranged on two sides of the electrode plate; and
each hot-pressing roller is correspondingly provided with the heating assembly, the hot-pressing drive member and the temperature sensor.

9. The hot-pressing roller mechanism according to claim 8, wherein the two hot-pressing rollers are arranged axially symmetrical to each other.

10. A pressing roller mechanism, comprising:
a cold-pressing roller mechanism, configured to perform preliminary extrusion on an electrode plate to which an adhesive tape has been applied; and
a hot-pressing roller mechanism, arranged downstream of the cold-pressing roller mechanism;
wherein the hot-pressing roller mechanism is configured to perform hot pressing on the electrode plate subjected to preliminary extrusion; and the hot-pressing roller mechanism is the hot-pressing roller mechanism according to any one of claims 1-9.

11. The pressing roller mechanism according to claim 10, further comprising a preheating assembly; wherein the preheating assembly is located between the cold-pressing roller mechanism and the hot-pressing roller mechanism along a transport path of the electrode plate; and the preheating assembly is configured to preheat an adhesive tape on the preliminarily extruded electrode plate.

12. The pressing roller mechanism according to claim 11, wherein the preheating assembly comprises a hot air blowing assembly, the hot air blowing assembly comprises a hot air blowing gun and a hot air blowing gun cover, and the hot air blowing gun cover is arranged at an end of the hot air blowing gun close to the electrode plate.

13. The pressing roller mechanism according to claim 12, wherein an angle between an air outlet direction of the hot air blowing assembly and an electrode plate transport direction is 80-100 degrees.

14. The pressing roller mechanism according to claim 10, wherein the cold-pressing roller mechanism comprises a cold-pressing drive member and a cold-pressing roller, the cold-pressing drive member is connected to the cold-pressing roller, and the cold-pressing drive member is configured to drive the cold-pressing roller to move in a direction close to or away from the electrode plate.

15. The pressing roller mechanism according to claim 10, comprising two hot-pressing rollers, two cold-pressing rollers, and two preheating assemblies; wherein the two hot-pressing rollers, the two cold-pressing rollers, and the two preheating assemblies are respectively arranged on two sides of the electrode plate.

16. The hot-pressing roller mechanism according to claim 15, wherein the two hot-pressing rollers are arranged axially symmetrical to each other; and/or, the two cold-pressing rollers are arranged axially symmetrical to each other; and/or, the two preheating assemblies are arranged axially symmetrical to each other.

17. An adhesive application device, comprising the pressing roller mechanism according to any one of claims 10 to 16.

18. The adhesive application device according to claim 17, further comprising a control assembly, wherein a hot-pressing roller mechanism, a cold-pressing roller mechanism, and a preheating assembly are respectively connected to the control assembly; and the control assembly is configured to control a distance between a hot-pressing roller of the hot-pressing roller mechanism and an electrode plate, control a temperature of the hot-pressing roller, control a distance between a cold-pressing roller of the cold-pressing roller mechanism and the electrode plate, and control a heating temperature of the preheating assembly.

19. A battery production system, comprising the adhesive application device according to claim 17 or 18.
